# EUROPEAN PATENT SPECIFICATION

(11) **EP 3 859 489 B1**
(45) Date of publication and mention of the grant of the patent: **29.07.2026**
(21) Application number: 19872386.8
(22) Date of filing: 14.10.2019
(51) Int. Cl.: G06F 3/01, G06T 7/73, G06V 20/20, G06V 40/10, G06V 40/20

(54) **GESTURE-BASED MANIPULATION METHOD AND TERMINAL DEVICE**
GESTENBASIERTES MANIPULATIONSVERFAHREN UND ENDGERÄT
PROCÉDÉ DE MANIPULATION BASÉ SUR LE GESTE ET DISPOSITIF DE TERMINAL

(30) Priority: 15.10.2018 CN 201811198807
(43) Date of publication of application: 04.08.2021
(73) Proprietor: Huawei Technologies Co., Ltd., Shenzhen, Guangdong 518129 (CN)
(72) Inventor: WANG, Xingyu, Shenzhen, Guangdong 518129 (CN); ZHAO, Lei, Shenzhen, Guangdong 518129 (CN); WU, Hang, Shenzhen, Guangdong 518129 (CN); ZHANG, Qilong, Shenzhen, Guangdong 518129 (CN)
(74) Representative: Körber, Martin Hans
(86) International application number: PCT/CN2019/111035
(87) International publication number: WO 2020/078319

(56) References cited:
- EP-A1- 3 101 511
- WO-A1-2017/140569
- CN-A- 105 160 323
- CN-A- 107 578 023
- CN-A- 107 885 317
- US-A1- 2013 265 220
- US-A1- 2016 239 080
- US-A1- 2017 193 289
- UEDA E ET AL: "Hand pose estimation using multi-viewpoint silhouette images", PROCEEDINGS OF THE 2001 IEEE/RSJ INTERNATIONAL CONFERENCE ON INTELLIGENT ROBOTS AND SYSTEMS. (IROS 2001). MAUI, HAWAII, OCT. 29 - NOV. 3, 2001; [IEEE/RSJ INTERNATIONAL CONFERENCE ON INTELLIGENT ROBOTS AND SYSTEMS], NEW YORK, NY : IEEE, US, vol. 4, 29 October 2001 (2001-10-29), pages 1989 - 1996, XP010573410, ISBN: 978-0-7803-6612-1, DOI: 10.1109/IROS.2001.976365
- CHA YOUNG-WOON ET AL: "Depth Data-Driven Real-Time Articulated Hand Pose Recognition", 8 December 2014, ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 492 - 5, ISBN: 978-3-642-17318-9, XP047297154
- FRANZISKA MUELLER ET AL: "Real-time Hand Tracking under Occlusion from an Egocentric RGB-D Sensor", ARXIV.ORG, CORNELL UNIVERSITY LIBRARY, 201 OLIN LIBRARY CORNELL UNIVERSITY ITHACA, NY 14853, 7 April 2017 (2017-04-07), XP081401226, DOI: 10.1109/ICCV.2017.131
- BYUNGKYU KANG ET AL: "Poster: Real time hand pose recognition with depth sensors for mixed reality interfaces", 2013 IEEE SYMPOSIUM ON 3D USER INTERFACES (3DUI), IEEE, 16 March 2013 (2013-03-16), pages 171 - 172, XP032479345, ISBN: 978-1-4673-6097-5, [retrieved on 20130628], DOI: 10.1109/3DUI.2013.6550233

## Description

### TECHNICAL FIELD

This application relates to the field of human-computer interaction, and in particular, to a gesture-based manipulation method and a terminal device.

### BACKGROUND

A virtual reality technology and an augmented reality technology are multimedia technologies that emerge in recent years. The virtual reality technology provides an immersive interactive environment based on a multimedia computer technology, a sensing technology, and a simulation technology. Specifically, a computer technology is used to generate a realistic virtual environment that integrates visual, auditory, and haptic modalities. A user uses a necessary device to interact with and control an object naturally in the virtual environment, to obtain a sensation and experience the same as those obtained in a real environment. The augmented reality technology is a technology in which a location and an angle of an image of a camera in real time is calculated and the corresponding image is added. A goal of this technology is to "seamlessly" integrate real world information with virtual world information, so that a real environment and a virtual object are superimposed onto a same picture or space in real time. In this way, the real world is supplemented, to enhance real-world experience of people in terms of visual, auditory, and haptic modalities and the like.

Gesture recognition is one of core technologies in vision-based human-computer interaction. The user may interact with a virtual object by using a gesture recognition based human-computer interaction method. In a virtual reality or augmented reality scenario, the user may interact with an augmented object (the virtual object) in a three-dimensional space by using a gesture. This enhances an immersive sensation. In this interaction manner, the user no longer needs to use an external device such as a keyboard, a mouse, or a handle controller to manipulate the virtual object, and not only taps the virtual object on a touchscreen. Compared with another interaction manner, a gesture interaction technology is more complex. However, the technology has at least the following advantages: (1) Remote control can be implemented without physical contact. (2) Interaction actions are richer and more natural. Different operations have different gestures, and the operations are not limited to common operations such as tapping and sliding. (3) There is almost no impact on user activities, and gesture operations can be continued at any time.

A currently used gesture-based interaction method is to analyze a gesture to obtain a shape feature or a motion track of the gesture, recognize the corresponding gesture based on the shape feature or the motion track of the gesture, and then perform a corresponding control operation. In this solution, only several limited shape features or motion tracks of gestures are configured for a terminal device. In this case, the terminal device can recognize only these gestures. Consequently, scalability is poor, and a recognition success rate is relatively low.

US 2013/0265220 A1 discloses that a tracking module processes depth data of a user performing movements, for example, movements of the user's hand and fingers. The tracked movements are used to animate a representation of the hand and fingers, and the animated representation is displayed to the user using a three-dimensional display. Also displayed are one or more virtual objects with which the user can interact.

UEDAE ET AL: "Hand pose estimation using multi-viewpoint silhouette images", PROCEEDINGS OF THE 2001 IEEE/RSJ INTERNATIONAL CONFERENCE ON INTELLIGENT ROBOTS AND SYSTEMS. (IROS 2001). MAUI, HAWAII, OCT. 29 - NOV. 3, 2001; [IEEE/RSJ INTERNATIONAL CONFERENCE ON INTELLIGENT ROBOTS AND SYSTEMS], NEW YORK, NY : IEEE, US, vol. 4, 29 October 2001 (2001-10-29), pages 1989 - 1996, discloses a method for hand pose estimation that is used for 3D free-form input interfaces.

US 2016/0239080 A1 discloses a method of realistic rotation of a virtual object for an interaction between a control object in a three-dimensional (3D) sensory space and the virtual object in a virtual space that the control object interacts with.

CHA YOUNG-WOON ET AL: "Depth Data-Driven Real-Time Articulated Hand Pose Recognition", 8 December 2014, ICIAP: INTERNATIONAL CONFERENCE ON IMAGE ANALYSIS AND PROCESSING, 17TH INTERNATIONAL CONFERENCE, NAPLES, ITALY. SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 492 - 5, ISBN: 978-3-642-17318-9, discloses a method to recognize articulated hand pose from single depth images.

FRANZISKAMUELLER ET AL: "Real-time Hand Tracking under Occlusion from an Egocentric RGB-D Sensor", ARXIV.ORG, CORNELL UNIVERSITY LIBRARY, 201 OLIN LIBRARY CORNELL UNIVERSITY ITHACA, NY 14853, 7 April 2017 (2017-04-07), discloses an approach for hand pose estimation from moving camera.

US 2017/193289 A1 discloses a system of inverse reconstruction of a skeleton model of a hand, comprising: an imager adapted to capture at least one image of a hand; a memory storing a plurality of hand pose features records, each defined by a unique set of discrete pose values; a code store storing a code; at least one processor coupled to the imager, memory and program store for executing the stored code, the code comprising: code instructions to identify a group of discrete pose values from an analysis of the at least one image; code instructions to select a hand pose features record from the hand pose features records according to the group of discrete pose values; and code instructions to reconstruct a skeleton model of the hand in the hand pose from the hand pose features record based on a hand model which maps kinematic characteristics of a plurality of hand organs.

BYUNGKYU KANG ET AL:"Poster: Real time hand pose recognition with depth sensors for mixed reality interfaces", 2013 IEEE SYMPOSIUM ON 3D USER INTERFACES (3DUI), IEEE, 16 March 2013 (2013-03-16), pages 171 - 172, discloses a method for predicting articulated hand poses in real-time with a single depth camera.

### SUMMARY

Embodiments of this application provide a gesture-based manipulation method and a terminal device, so that all natural gestures and continuous hand actions can be included, an operation is more natural, operation efficiency is higher, and human-computer interaction experience of a user is improved. The invention is set out in the claims annexed hereto and the scope of protection is defined by the claims. In the following, parts of the description and drawings referring to embodiments that are not covered by the claims are not presented as embodiments of the invention, but as examples useful for understanding the invention.

A first aspect of the embodiments of this application provides a gesture-based manipulation method. The method is performed by a terminal device, and the method includes: displaying a target picture, where the target picture includes a virtual object to be manipulated by using a detected gesture or a detected hand action; obtaining F sets of hand images; recognizing locations of hand knuckles on hands in the F sets of hand images based on the F sets of hand images, to obtain spatial locations of F groups of hand knuckles, where spatial locations of any group of hand knuckles are spatial locations of hand knuckles on a hand in a set of hand images, and F is an integer greater than 0; and performing, based on the spatial locations of the F groups of hand knuckles, a control operation corresponding to the spatial locations of the F groups of hand knuckles, where the control operation is used to adjust a location and/or a form of the virtual object in the target picture.

The F sets of hand images may be images captured by a depth camera and a color camera on the terminal device, or may be only depth images captured by a depth camera. A set of hand images may include a depth image and a color image (for example, an RGB image) that are respectively obtained by using the depth camera and the color camera by synchronously photographing a same scene, or may include only a depth image captured by the depth camera. That the depth camera and the color camera synchronously photograph a same scene means that a time interval between a moment for photographing the same scene by using the depth camera and a moment for photographing the same scene by using the color camera is less than a time threshold. The time threshold may be 1 millisecond, 5 milliseconds, 10 milliseconds, or the like. Optionally, a color image and a depth image that are included in any set of hand images are images obtained by photographing a same scene at a same moment. Alternatively, the F sets of hand images may be F sets of hand images obtained by performing, by a terminal 3, hand segmentation on F sets of original images captured by a camera. A spatial location of a knuckle means three-dimensional coordinates of the knuckle. The virtual object may be a virtual object such as a virtual character, a virtual animal, or a virtual thing that is displayed on the terminal device and that may be manipulated by a user by using a gesture. Optionally, the terminal device presets a trained recognition network, and may sequentially input the F sets of hand images to the recognition network, to obtain spatial locations of a group of knuckles corresponding to each set of hand images. In this manner, a spatial location of each hand knuckle in each set of hand images can be quickly and accurately determined. During actual application, after obtaining a set of hand images, the terminal device recognizes hand knuckles in the set of hand images, stores obtained spatial locations of a group of knuckles, and determines a gesture corresponding to the spatial locations of the group of knuckles. The terminal device may recognize hand knuckles in all sets of hand images according to an order for obtaining all the sets of hand images. It may be understood that any natural gesture or any hand action may be represented as spatial locations of one or more groups of knuckles. On the contrary, spatial locations of one or more groups of knuckles may be used to determine any natural gesture or any hand action. A natural gesture is any gesture, that is, any gesture that can be made by the user. In this embodiment of this application, the terminal device determines a control operation of the user based on spatial locations of hand knuckles, so that all natural gestures and continuous hand actions can be included, an operation is more natural, operation efficiency is higher, and human-computer interaction experience of the user is improved.

In an optional implementation, the performing a control operation corresponding to the spatial locations of the F groups of hand knuckles includes: determining M gesture types based on the spatial locations of the F groups of hand knuckles, where M is less than or equal to F, and M is a positive integer; and performing the control operation corresponding to the M gesture types. In this implementation, the terminal device determines one or more gesture types based on spatial locations of one or more hand knuckles, and then performs a control operation corresponding to the one or more gesture types, so that various gestures can be accurately recognized.

In an optional implementation, the determining M gesture types corresponding to the spatial locations of the F groups of hand knuckles includes: calculating angles between hand knuckles in one group of hand knuckles in the F groups of hand knuckles based on spatial locations of the group of hand knuckles; and determining, based on the angles between the hand knuckles, a gesture type corresponding to the spatial locations of the group of hand knuckles.

In an optional implementation, the determining M gesture types corresponding to the spatial locations of the F groups of hand knuckles includes: determining at least two gesture types corresponding to the spatial locations of the F groups of hand knuckles, where F is greater than 1; and the performing the control operations corresponding to the M gesture types includes: performing, based on a gesture type change in the at least two gesture types, the control operation corresponding to the at least two gesture types.

In an optional implementation, the performing a control operation corresponding to the spatial locations of the F groups of hand knuckles includes: determining, based on the spatial locations of the F groups of hand knuckles, M gesture types corresponding to the spatial locations of the F groups of hand knuckles, where F is greater than 1, and M is less than or equal to F; and performing the control operation based on the spatial locations of the F groups of hand knuckles and the M gesture types.

In an optional implementation, the performing the control operation based on the spatial locations of the F groups of hand knuckles and the M gesture types includes: determining a spatial location change in hand knuckles between hand knuckle groups based on the spatial locations of the F groups of hand knuckles; and performing the control operation based on the M gesture types and the spatial location change; or
determining a spatial location change in hand knuckles between hand knuckle groups based on the spatial locations of the F groups of hand knuckles; and performing the control operation based on a gesture type change in the M gesture types and the spatial location change; or
performing the control operation based on a gesture type change in the M gesture types and the spatial locations of the F groups of hand knuckles.

In an optional implementation, the performing the control operation based on the M gesture types and the spatial location change includes: when at least one of the M gesture types is a target gesture type, determining a spatial location change in hand knuckles between hand knuckle groups based on the spatial locations of the F groups of hand knuckles, where the target gesture type is used to adjust the location of the virtual object in the target picture.

In an optional implementation, the performing a control operation corresponding to the spatial locations of the F groups of hand knuckles includes: determining a spatial location change in hand knuckles between hand knuckle groups based on the spatial locations of the F groups of hand knuckles, where F is greater than 1; and performing the control operation based on the spatial location change.

In an optional implementation, the method further includes: when a quantity of hand knuckles in each of K sets of hand images is less than a quantity threshold, notifying that a gesture operation goes beyond a manipulation range, where the K sets of hand images are included in the F sets of hand images, K is less than or equal to F, and K is a positive integer.

In an optional implementation, the recognizing locations of hand knuckles in the F sets of hand images based on the F sets of hand images, to obtain spatial locations of F groups of hand knuckles includes:
detecting, based on at least one of a color image and a depth image that are included in any set of hand images in the F sets of hand images, a location area in which a hand in the any set of hand images is located; and
recognizing locations of hand knuckles on the hand in the location area based on at least one of the color image and the depth image.

In an optional implementation, the performing the control operation based on the spatial location change includes: determining a movement track of a hand based on the spatial location change; and moving the virtual object along the movement track of the hand, and performing vibration, where a vibration strength of the vibration is positively correlated or negatively correlated with a distance from the hand to the terminal device.

In an optional implementation, the performing the control operation based on the spatial location change includes: determining a hand action based on the spatial location change; and performing an adjustment operation corresponding to the hand action, where the adjustment operation is used to adjust the form of the virtual object.

In an optional implementation, the detecting, based on at least one of a color image and a depth image that are included in any set of hand images in the F sets of hand images, a location area in which a hand in the any set of hand images is located includes: detecting, based on a color image included in a target set of hand images, a first location area in which a hand in the color image included in the target set of hand images is located, where the target set of hand images is any set of images in the F sets of hand images; and the recognizing locations of hand knuckles on the hand in the location area based on at least one of the color image and the depth image includes:
recognizing, based on a depth image included in the target set of hand images, locations of hand knuckles on a hand in a second location area in the depth image, to obtain spatial locations of a group of hand knuckles corresponding to the target set of hand images, where the second location area is an area that is in the depth image and that corresponds to the first location area, and the depth image and the color image are images obtained by synchronously photographing a same scene.

In an optional implementation, the detecting, based on at least one of a color image and a depth image that are included in any set of hand images in the F sets of hand images, a location area in which a hand in the any set of hand images is located includes: detecting, based on a color image included in a target set of hand images, a first location area in which a hand in the color image is located, where the target set of hand images is any set of images in the F sets of hand images; and
the recognizing locations of hand knuckles on the hand in the location area based on at least one of the color image and the depth image includes: recognizing locations of hand knuckles on the hand in the first location area based on the color image, to obtain spatial locations of a first group of hand knuckles; recognizing, based on a depth image included in the target set of hand images, locations of hand knuckles on a hand in a second location area in the depth image, to obtain spatial locations of a second group of hand knuckles, where the second location area is an area that is in the depth image and that corresponds to the first location area, and the depth image and the color image are images obtained by synchronously photographing a same scene; and merging the spatial locations of the first group of hand knuckles and the spatial locations of the second group of hand knuckles, to obtain spatial locations of a group of hand knuckles corresponding to the target set of hand images.

In an optional implementation, before the recognizing hand knuckles in the F sets of hand images, to obtain spatial locations of F groups of hand knuckles, the method further includes: synchronously photographing the same scene by using a color sensor and a depth sensor, to obtain an original color image and an original depth image; spatially aligning the original color image and the original depth image; and separately performing hand segmentation on an aligned original color image and an aligned original depth image, to obtain the target set of hand images.

In an optional implementation, the recognizing locations of hand knuckles in the F sets of hand images, to obtain spatial locations of F groups of hand knuckles includes: detecting, based on a depth image included in a target set of hand images, a location area in which a hand in the depth image is located, where the target set of hand images is any set of images in the F sets of hand images; and recognizing locations of hand knuckles on the hand in the location area in the depth image based on the depth image, to obtain spatial locations of a group of hand knuckles corresponding to the target set of hand images.

A second aspect of the embodiments of this application provides a terminal device. The terminal device includes: a display unit, configured to display a target picture, where the target picture includes a virtual object to be manipulated by using a detected gesture or a detected hand action; an obtaining unit, configured to obtain F sets of hand images; a recognition unit, configured to recognize locations of hand knuckles on hands in the F sets of hand images based on the F sets of hand images, to obtain spatial locations of F groups of hand knuckles, where spatial locations of any group of hand knuckles are spatial locations of hand knuckles on a hand in a set of hand images, and F is an integer greater than 0; and a processing unit, configured to perform, based on the spatial locations of the F groups of hand knuckles, a control operation corresponding to the spatial locations of the F groups of hand knuckles, where the control operation is used to adjust a location and/or a form of the virtual object in the target picture.

In an optional implementation, the processing unit is configured to: determine at least one gesture corresponding to the spatial locations of the F groups of knuckles; and perform the control operation corresponding to the at least one gesture.

In an optional implementation, the processing unit is configured to: calculate angles between hand knuckles in one group of hand knuckles in the F groups of hand knuckles based on spatial locations of the group of hand knuckles; and determine, based on the angles between the hand knuckles, a gesture type corresponding to the spatial locations of the group of hand knuckles.

In an optional implementation, the processing unit is configured to: determine at least two gesture types corresponding to the spatial locations of the F groups of hand knuckles, where F is greater than 1; and perform, based on a gesture type change in the at least two gesture types, the control operation corresponding to the at least two gesture types.

In an optional implementation, the processing unit is configured to: determine, based on the spatial locations of the F groups of hand knuckles, M gesture types corresponding to the spatial locations of the F groups of hand knuckles, where F is greater than 1, and M is less than or equal to F; and perform the control operation based on the spatial locations of the F groups of hand knuckles and the M gesture types.

In an optional implementation, the processing unit is configured to: determine a spatial location change in hand knuckles between hand knuckle groups based on the spatial locations of the F groups of hand knuckles; and perform the control operation based on the M gesture types and the spatial location change; or
the processing unit is configured to: determine a spatial location change in hand knuckles between hand knuckle groups based on the spatial locations of the F groups of hand knuckles; and perform the control operation based on a gesture type change in the M gesture types and the spatial location change; or
the processing unit is configured to perform the control operation based on a gesture type change in the M gesture types and the spatial locations of the F groups of hand knuckles.

In an optional implementation, the processing unit is configured to: determine a spatial location change in hand knuckles between hand knuckle groups based on the spatial locations of the F groups of hand knuckles, where F is greater than 1; and perform the control operation based on the spatial location change.

In an optional implementation, the processing unit is configured to: when a quantity of hand knuckles in each of K sets of hand images is less than a quantity threshold, notify that a gesture operation goes beyond a manipulation range, where the K sets of hand images are included in the F sets of hand images, K is less than or equal to F, and K is a positive integer.

In an optional implementation, the recognition unit is configured to: detect, based on at least one of a color image and a depth image that are included in any set of hand images in the F sets of hand images, a location area in which a hand in the any set of hand images is located; and recognize locations of hand knuckles on the hand in the location area based on at least one of the color image and the depth image.

In an optional implementation, the recognition unit is configured to: detect, based on a color image included in a target set of hand images, a first location area in which a hand in the color image included in the target set of hand images is located, where the target set of hand images is any set of images in the F sets of hand images; and recognize, based on a depth image included in the target set of hand images, locations of hand knuckles on a hand in a second location area in the depth image, to obtain spatial locations of a group of hand knuckles corresponding to the target set of hand images, where the second location area is an area that is in the depth image and that corresponds to the first location area, and the depth image and the color image are images obtained by synchronously photographing a same scene.

In an optional implementation, the recognition unit is configured to: detect, based on a color image included in a target set of hand images, a first location area in which a hand in the color image is located, where the target set of hand images is any set of images in the F sets of hand images; recognize locations of hand knuckles on the hand in the first location area based on the color image, to obtain spatial locations of a first group of hand knuckles; recognize, based on a depth image included in the target set of hand images, locations of hand knuckles on a hand in a second location area in the depth image, to obtain spatial locations of a second group of hand knuckles, where the second location area is an area that is in the depth image and that corresponds to the first location area, and the depth image and the color image are images obtained by synchronously photographing a same scene; and merge the spatial locations of the first group of hand knuckles and the spatial locations of the second group of hand knuckles, to obtain spatial locations of a group of hand knuckles corresponding to the target set of hand images.

In an optional implementation, the obtaining unit includes: a color sensor, configured to photograph the same scene, to obtain an original color image; a depth sensor, configured to photograph the same scene, to obtain an original depth image; an alignment subunit, configured to spatially align the original color image and the original depth image; and a segmentation subunit, configured to separately perform hand segmentation on an aligned original color image and an aligned original depth image, to obtain the target set of hand images.

A third aspect of the embodiments of this application provides a computer-readable storage medium. The computer storage medium stores a computer program, the computer program includes program instructions. When the program instructions are executed by a processor, the processor is enabled to perform the method according to any one of the first aspect or the optional implementations of the first aspect.

A fourth aspect of the embodiments of this application provides a terminal device. The terminal device includes a processor and a memory. The memory is configured to store code. The processor reads the code stored in the memory, to perform the method according to the first aspect.

A fifth aspect of the embodiments of this application provides a computer program product. When the computer program product runs on a computer, the computer is enabled to perform some or all steps of any method according to the first aspect.

### BRIEF DESCRIPTION OF DRAWINGS

FIG. 1 is a schematic structural diagram of a terminal device according to an embodiment of this application;
FIG. 2 is a schematic structural diagram of a terminal device according to an embodiment of this application;
FIG. 3 is a schematic logical structural diagram of a terminal 300 according to an embodiment of this application;
FIG. 4 is a schematic logical structural diagram of an obtaining unit according to an embodiment of this application;
FIG. 5 is a schematic diagram of determining a clenched fist gesture based on spatial locations of a group of hand knuckles according to an embodiment of this application;
FIG. 6 is a schematic diagram of determining a five-finger splay gesture based on spatial locations of a group of hand knuckles according to an embodiment of this application;
FIG. 7 is a flowchart of a gesture-based manipulation method according to an embodiment of this application;
FIG. 8 is a flowchart of another gesture-based manipulation method according to an embodiment of this application;
FIG. 9 is a schematic diagram of releasing a bullet by using a five-finger splay gesture according to an embodiment of this application;
FIG. 10 is a flowchart of another gesture-based manipulation method according to an embodiment of this application;
FIG. 11 is a schematic diagram of a picture displayed by a terminal device according to an embodiment of this application;
FIG. 12 is a schematic diagram of a movement process of a hand according to an embodiment of this application;
FIG. 13 is a schematic diagram of a relationship between a vibration strength and a distance from a hand to a terminal device according to an embodiment of this application; and
FIG. 14 is a schematic structural diagram of hardware of a terminal device according to an embodiment of the present invention.

### DESCRIPTION OF EMBODIMENTS

To help a person skilled in the art understand the technical solutions in the embodiments of this application better, the following clearly describes the technical solutions in the embodiments of this application with reference to the accompanying drawings in the embodiments of this application. It is clear that the described embodiments are merely some rather than all of the embodiments of this application.

In the embodiments of the specification, the claims, and the accompanying drawings of this application, the terms "first", "second", "third", and the like are intended to distinguish between similar objects but do not necessarily indicate a specific order or sequence. In addition, the terms "include", "have", and any variant thereof are intended to cover a non-exclusive inclusion, for example, include a series of steps or units. Methods, systems, products, or devices are not necessarily limited to those steps or units that are clearly listed, but may include other steps or units that are not clearly listed or that are inherent to such processes, methods, products, or devices. "and/or" is used to represent that one or both in two objects connected with "and/or" are selected. For example, "A and/or B" represents A, B, or A+B.

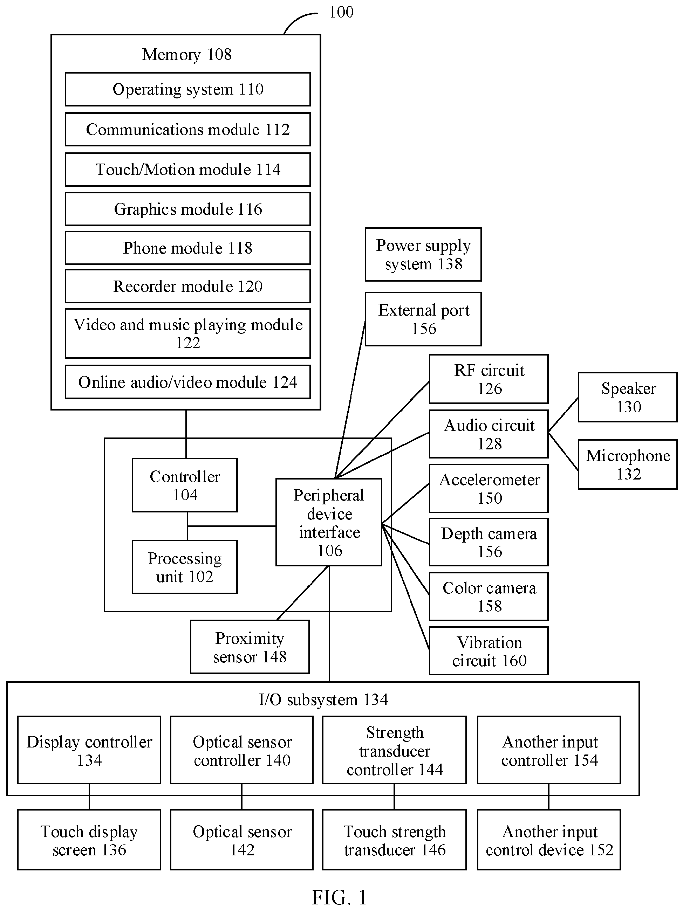

FIG. 1 is a schematic structural diagram of a terminal device 100 according to an embodiment of this application. The terminal device 100 may be but is not limited to a mobile phone, a tablet computer, a notebook computer, a smart watch, a television set, AR glasses, VR glasses, or another electronic device having a display screen. The terminal device 100 may support a plurality of application programs, such as one or more of the following: a drawing application program, a word processing application program, a website browsing application program, a spreadsheet application program, an office software application program, a game application program, a phone application program, a video conference application program, an email application program, an instant messaging application program, a health management application program, a photo management application program, a digital camera application program, a digital video camera application program, a vibration management application program, a digital music player application program, and a digital video player application program. An instruction input by a user is optionally obtained through at least one hardware interface device, for example, including but not limited to a touch display screen 136, a depth camera 156, and a color camera 158, for each application program executed on the terminal device 100.

The terminal device 100 may include a memory 108 (which may include one or more computer-readable storage media), one or more processing units (for example, including but not limited to at least one of a central processing unit (Central Processing Unit, CPU), a graphics processing unit (Graphics Processing Unit, GPU), a neural network processor (Neural-network Processing Unit, NPU), a digital signal processor (Digital Signal Processing, DSP), and a field-programmable gate array (Field-Programmable Gate Array, FPGA)) 120. The terminal device 100 may further include at least one of a memory controller 104, a peripheral device interface 106, an RF circuit 126, an audio circuit 128, a speaker 130, the touch display screen 136, a microphone 132, an input/output (I/O) subsystem 106, another input or control device 116, and an external port 156. The terminal device 100 may further include one or more optical sensors 142. The terminal device 100 may further include one or more strength transducers 146 configured to detect a strength of a touch on the touch display screen 136 (for example, configured to detect a strength of a touch on the touch display screen 136, where the "strength" represents pressing force or pressure of the touch (for example, a finger touch) on the touch display screen 136). These components optionally communicate with each other through one or more buses or signal cables. It should be understood that the terminal device 100 may also include a display screen having no function of perceiving a touch of the user, to replace the touch display screen 136. The terminal device 100 may further include a depth camera 156 and a color camera 158. The depth camera 156 is configured to capture a depth image. The color camera 158 is configured to capture a color image, for example, an RGB image. The depth camera 156 and the color camera 158 may obtain images by synchronously photographing a same scene under control of one or more processing units on the terminal device 100. Because the depth camera 156 is located at a location the same as or close to a location of the color camera 158 on the terminal device 100, scenes photographed by using the depth camera 156 and the color camera 158 may be considered as the same scene. The terminal device 100 may further include a vibration circuit 160. The vibration circuit 160 is configured to provide one or more vibration manners, so that the terminal device 100 achieves different vibration strengths or vibration effects. The vibration circuit 160 may include a component such as a vibration motor.

It should be understood that the terminal device 100 is merely an example, and the terminal device 100 may have more or fewer components than those shown in the figure, and optionally combine two or more components. Various components shown in FIG. 1 are implemented by using hardware, software, or a combination of hardware and software, and may further include at least one of a signal processing application-specific integrated circuit and an application-specific integrated circuit.

The memory 108 may include a high-speed random access memory, and may optionally include a nonvolatile memory, for example, one or more magnetic disk storage devices, a flash storage device, or another nonvolatile solid-state storage device. Access to the memory 108 by another component (for example, the CPU 120 and the peripheral device interface 118) on the terminal device 100 is optionally controlled by the controller 104 in the memory.

The peripheral device interface 106 may be configured to couple an input peripheral device and an output peripheral device on the terminal device 100 to the processing unit 102 and the memory 108. The one or more processing units 102 run or execute software programs and/or instruction sets stored in the memory 108, to perform various functions of the device 100 and process data. The peripheral device interface 106, the processing unit 102, and the memory controller 104 may be implemented on a single chip such as a chip 104. The peripheral device interface 106, the processing unit 102, and the memory controller 104 may alternatively be implemented on independent chips.

The radio frequency (Radio Frequency, RF) circuit 126 is configured to receive and send an RF signal, where the RF signal is also referred to as an electromagnetic signal. The RF circuit 126 converts an electrical signal into an electromagnetic signal or converts an electromagnetic signal into an electrical signal, and communicates with a communications network and another communications device by using the electromagnetic signal. The RF circuit 126 may include a circuit configured to perform the foregoing functions, and includes but is not limited to an antenna system, an RF transceiver, one or more amplifiers, a tuner, one or more oscillators, a digital signal processor, a codec chip set, and the like. The RF circuit 126 may communicate with a network and another device through wireless communication. The network may be, for example, the internet (also referred to as a world wide web (WWW), an intranet, a wireless local area network (LAN), or a metropolitan area network (MAN)). The wireless communication may include any one of a plurality of communications standards, protocols, and technologies, including but not limited to global system for mobile communications (GSM), enhanced data GSM environment (EDGE), high speed downlink packet access (HSDPA), high speed uplink packet access (HSUPA), evolution, evolution-data optimized (EV-DO), HSPA, HSPA+, dual-cell HSPA (DC-HSPDA), long term evolution (LTE), near field communication (NFC), wideband code division multiple access (WCDMA), code division multiple access (CDM), time division multiple access (TDM), Bluetooth, wireless fidelity (Wi-Fi) (for example, IEEE802. 11a, IEEE 802. 11b, IEEE 802. 11g, or IEEE 802. 11n), voice over internet protocol (VoIP), Wi-MAX, an email protocol (for example, internet message access protocol (IMAP) and/or post office protocol (POP)), instant messaging (for example, extensible messaging and presence protocol (XMPP), session initiation protocol for instant messaging and presence (SMPLE), or instant messaging and presence service (MPS)), or short message service (SMS). In addition, the wireless communication also includes a communications protocol that is still not developed on a submission date of this document.

The audio circuit 128, the speaker 130, and the microphone 132 each provide an audio interface between the user and the device 100. The audio circuit 128 receives audio data from the peripheral device interface 118, converts the audio data into an electrical signal, and transmits the electrical signal to the speaker 130. The speaker 130 converts the electrical signal into a sound wave that a person can hear. The audio circuit 128 further receives an electrical signal that is obtained by the microphone 132 by converting a sound wave. The audio circuit 128 converts the electrical signal into audio data, and transmits the audio data to the peripheral device interface 106 for processing. The audio data may be transmitted to the memory 108, the processing unit 102, or the RF circuit 126 through the peripheral device interface 106. The audio circuit 128 may further include a headset jack. The headset jack provides an interface between the audio circuit 128 and a removable audio input/output peripheral device. The peripheral device may be an output-only headset, or the peripheral device may be a headset having both an output (for example, a single-earpiece headset or a double-earpiece headset) and an input (for example, a microphone).

The I/O subsystem 134 couples the input/output peripheral device such as the touch display screen 136 and another input control device 152 on the terminal device 100 to the peripheral device interface 106. The I/O subsystem 134 may include a display controller 134, an optical sensor controller 140, a strength transducer controller 144, or another input controller 154 used for the another input control device 116. The another input controller 154 receives an electrical signal from the another input control device 116 or sends an electrical signal to the another input control device 116. The another input control device 116 optionally includes a physical button (for example, a press button or an arm rocking button), a dialer, a slide switch, a joystick, a click wheel, and the like. The another input controller 154 may be optionally coupled to any one of the following: a keyboard, an infrared port, a USB port, and a pointing device (for example, a mouse). The physical button may also include a volume-up button or a volume-down button used for volume control over the speaker 130, a headset, or an earphone. The physical button may also include a pressing button used to power on/off the terminal device 100 and lock the terminal device 100.

The touch display screen 136 provides an input interface and an output interface between the terminal device 100 and the user. The display controller 134 receives an electrical signal from the touch display screen 136 or sends an electrical signal to a touchscreen 112. The touch display screen 136 displays a visual output to the user. The visual output optionally includes a graph, a text, an icon, a dynamic picture, a video, and any combination thereof.

The touch display screen 136 may have a sensor or a sensor set that receives an input from the user based on a haptic or tactile touch. The touch display screen 136 and the display controller 134 (together with any associated module or instruction set in the memory 108) detect a touch (and any movement or interruption of the touch) on the touch display screen 136, and convert the detected touch into interaction between the user and a user interface object (for example, one or more virtual buttons, icons, web pages, graphics, or images) displayed on the touch display screen 136. A touch point between the touch display screen 136 and the user may correspond to a finger of the user, or may correspond to a stylus.

An IXD (liquid crystal display) technology, an LPD (light-emitting polymer display) technology, or an LED (light-emitting diode) technology may be used for the touch display screen 136. Any of a plurality of touch sensing technologies that are currently known or to be developed in the future may be used for the touch display screen 136 and the display controller 134. The touch sensing technology includes but is not limited to a capacitive touch sensing technology, a resistive touch sensing technology, an infrared touch sensing technology, or a surface acoustic wave touch sensing technology. In a specific implementation process, a projective mutual capacitance sensing technology may be used.

The touch display screen 136 may have video resolution greater than 100 dpi or other video resolution. Optionally, the user touches the touch display screen 136 through any suitable object or additional object such as a stylus or a finger. In some embodiments, the user interface may be designed for interaction with the user based on a touch through a finger and a gesture. Because a touch area of the finger on the touch display screen 136 is relatively large, an input through the touch may be less accurate than an input through a stylus. In some embodiments, the terminal device 100 translates a finger-based rough input into a precise pointer/cursor location or a command to perform an action expected by the user. In some embodiments, the terminal device 100 converts a gesture or a hand action of the user into a virtual object used to manipulate display of the touch display screen 136 or another control operation that can manipulate an object.

In some embodiments, in addition to the touchscreen, the terminal device 100 may further include a touchpad that is used to activate or deactivate a specific function through a touch of the user. In some embodiments, a touchpad area is different from an area of the touch display screen 136, and the two areas may be adjacent or not adjacent. The touchpad does not display a visual output.

The terminal device 100 may further include a power system 138 configured to supply power to the components. The power system 138 may include a power management system, one or more power supplies (for example, a battery or an alternating current (AC)), a recharging system, a power failure detection circuit, a power converter or inverter, a power status indicator (for example, a light-emitting diode (LED)), and any other component associated with generation, management, and distribution of power. The power supply system may further include a wireless charging receiver. The wireless charging receiver is configured to receive electric energy in a wireless charging manner, to charge the terminal device 100.

The terminal device 100 may further include one or more optical sensors 142 coupled to the optical sensor controller 140 in the I/O subsystem 134. The optical sensor 142 may include a charge coupled device (CCD) or a complementary metal-oxide-semiconductor (CMOS) phototransistor. The optical sensor 142 receives ambient light projected by one or more lenses, and converts the light into data representing an image.

The terminal device 100 may further include the touch strength transducer 146 coupled to the strength transducer controller 144 in the I/O subsystem 134. The touch strength transducer 146 may include one or more capacitive force transducers, electrical force transducers, piezoelectric force transducers, optical force transducers, or other strength transducers. The touch strength transducer 146 is configured to receive ambient touch strength information.

The terminal device 100 may further include one or more proximity sensors 148 coupled to the peripheral device interface 106. Alternatively, the proximity sensor 148 may be coupled to the input controller 160 in the I/O subsystem 134. In some embodiments, when the terminal device 100 is placed near an ear of the user (for example, when the user is making a call), the proximity sensor turns off and disables the touch display screen 136.

The terminal device 100 may further include one or more accelerometers 150 coupled to the peripheral device interface 106. Alternatively, the accelerometer 150 may be optionally coupled to the input controller 160 in the I/O subsystem 134. In some embodiments, data from the one or more accelerometers is analyzed, and is displayed on the touch display screen in a portrait view or in a landscape view. In addition to the one or more accelerometers 150, the terminal device 100 may further include a GPS (a GLONASS, or another global navigation system) receiver, to obtain location information of the device 100.

In some embodiments, the memory 108 may include an operating system 110, and include at least one of the following modules: a communications module (or an instruction set) 112, a touch/motion module (or an instruction set) 114, a graphics module (or an instruction set) 116, a phone module 118, a recorder module 120, a video and music playing module 122, and an online audio/video module 124. The foregoing modules are software code. The processing unit 102 implements a function of a corresponding module by reading corresponding code in the memory 108.

The operating system 110 (for example, Darwin, RTXC, LINUX, UNIX, OS X, WINDOWS, an embedded operating system (for example, VxWorks), Android, iOS, windows phone, Symbian, BlackBerry OS, or windows mobile) includes various software components and/or drives that are used to control and manage common system tasks (such as memory management, storage device control, and power management) and used for communication between various hardware components and software components.

The communications module 112 is configured to communicate with another device through one or more external ports 156, and further includes various software components used to process data received by the RF circuit 126 and/or through the external port 156. The external port 156 (for example, a universal serial bus (USB)) is configured to directly connect to another device or indirectly connect to another device through a network (for example, the internet or a wireless LAN). In some embodiments, the external port 156 may be a charging interface connected to the power system 138. The charging interface is connected to a charging cable, to obtain external electric energy through the charging cable. Alternatively, the external port 156 may be a data interface. The data interface is connected to a data cable, to obtain external data through the data cable. It should be understood that the external port 156 may have functions of both the data interface and the charging interface, and the data cable and the charging cable may correspondingly be a same cable.

The touch/motion module 114 may be configured to detect a touch on the touch display screen 136 (in combination with the display controller 134) and another touch device (for example, the touchpad). The touch/motion module 114 may include various software components used to perform various operations related to touch detection, for example, to determine whether a touch has occurred (for example, detect a finger press event), determine a strength of the touch (for example, pressing force or pressure of the touch), determine whether there is a touch movement and track the movement on a surface of the touch display screen 136 (for example, detect a one-finger or multi-finger drag event), and determine whether the touch has been terminated (for example, detect a finger lift event or a touch interrupt). The touch/motion module 114 receives touch data from the surface of the touch display screen 136. Determining a movement of a touch point may include determining a rate (a magnitude), a speed (a magnitude and a direction), or acceleration (a change in a magnitude and/or a direction) of the touch point. The movement of the touch point is represented by using a series of touch data. These operations are applicable to a single-point touch (for example, a single-finger touch) or a multi-point touch (for example, a "multi-point touch"/a multi-finger touch). In some embodiments, the touch/motion module 114 and the display controller 134 detect a touch on the touchpad. In some embodiments, the touch/motion module 114 may use one or more sets of strength thresholds to determine whether an operation has been performed by the user (for example, to determine whether the user has "tapped" an icon). The touch/motion module 114 may detect a gesture input of the user. Different gestures on the surface of the touch display screen 136 have different touch patterns (for example, different movements or strengths of detected touches). Therefore, a gesture may be detected by detecting a specific touch pattern. For example, detecting a finger tap gesture includes detecting a finger press event and then detecting a finger lift (lift-up) event at a same location (or a basically same location) (for example, at an icon location) as the finger press event. For another example, detecting a finger flick gesture on the surface of the touch display screen 136 includes detecting a finger press event, then detecting a one-finger or multi-finger drag event, and detecting a finger lift (lift-up) event.

The graphics module 116 may include various software components used to present and display a graph on the touch display screen 136 or another display, including a component used to change visual impact (for example, brightness, transparency, saturation, contrast, material, or another visual characteristic) of the displayed graph. In this application, the term "graph" includes any object that can be displayed to the user, for example, includes but is not limited to a text, a web page, an icon (for example, a user interface object including a softkey), a digital image, a video, an animation, or the like.

In some embodiments, the graphics module 116 may store data representing a to-be-displayed graph. Each graph may be assigned corresponding code. The graphics module 116 receives one or more pieces of code that specify a to-be-displayed graph, and may further receive coordinate data and other attribute data of the graph if necessary, and then generate corresponding image data and output the image data to the display controller 134 for displaying on the touch display screen 136.

In combination with at least one of the RF circuit 126, the audio circuit 128, the speaker 130, the microphone 132, the touch display screen 136, the display controller 156, the touch/motion module 114, and the graphics module 116, the phone module 118 may be configured to make a call, answer a call, perform a session, and disconnect or terminate the session when the session ends. As described above, any one of a plurality of communications standards, protocols, and technologies may be used for the wireless communication.

In combination with at least one of the audio circuit 128, the speaker 130, the microphone 132, the touch display screen 136, the display controller 156, the touch/motion module 114, and the graphics module 116, the recorder module 120 may be configured to perform recording, perform an interactive action with the user such as start, pause, resume, or finish recording in a recording process, and store recorded audio data.

In combination with at least one of the touch display screen 136, the display system controller 156, the touch/motion module 114, the graphics module 116, the audio circuit 128, the speaker 130, the external port 156, and the RF circuit 126, the video and music playing module 122 includes an executable file that allows the user to obtain and play audio/video data and another audio/video file that are stored in one or more file formats (for example, an MP3 file or an AAC file), and is configured to display and present or play, in another manner, audio/video (for example, on the touchscreen 112 or on an external display connected through the external port 156). In some embodiments, the device 100 may optionally include an audio/video player. The video and music playing module 122 may include a video playing module and a music playing module.

In combination with at least one of the touch display screen 136, the display system controller 156, the touch/motion module 114, the graphics module 116, the audio circuit 128, the speaker 130, the external port 156, and the RF circuit 126, the online audio/video module 124 is configured to access, receive (for example, through streaming transmission and/or downloading), and play (for example, on the touchscreen or on an external display connected through the external port 124) or manage, in another manner, online audio/video data in one or more file formats (such as H.264/H.265, AMR-WB, or EVS). The online audio/video module 124 may include an online audio module and an online video module.

The memory 108 may also include a video conferencing module, an email client module, an instant messaging module, a camera module used for a static image or a video image, a word processing application module, an image editing module, a drawing module, a JAVA enabling module, an encryption module, a digital rights management module, a voice recognition module, or a voice reproduction module.

Each of the foregoing modules and application programs may be configured to perform a method described in this application, or may be used as a module corresponding to a method described in this application. These modules (namely, instruction sets) do not need to be implemented as separate software programs, processes, or modules. Therefore, subsets of these modules may be optionally combined or rearranged in another manner in the embodiments. In some embodiments, the memory 108 optionally stores the subsets of the foregoing modules. The foregoing modules and application programs in the memory may also be implemented by using an integrated circuit or a combination of software and hardware. In addition, the memory 108 optionally stores an additional module and data structure that are not described above.

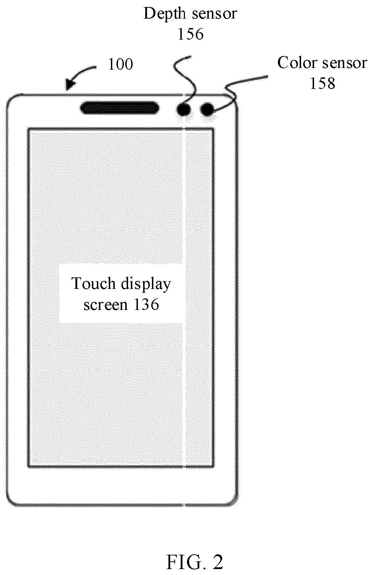

FIG. 2 is a schematic structural diagram of a terminal device 100 according to an embodiment of this application. As shown in FIG. 2, the terminal device may include a touch display screen 136, a depth camera 156, and a color camera 158. The depth camera 156 is configured to capture a depth image. The color camera 158 is configured to capture a color image, for example, an RGB image. The touch display screen 136 is configured to display a target picture, where the target picture includes a virtual object to be manipulated by using a detected gesture or a detected hand action. The depth camera 156, the color camera 158, and the touch display screen 136 are located on a same side of the terminal device 100. When a user watches the touch display screen 136, the depth camera 156 and the color camera 158 may obtain hand images of the user through photographing. As shown in FIG. 2, the depth camera 156 is located adjacent to the color camera 158, and scenes synchronously photographed by using the depth camera 156 and the color camera 158 may be considered as a same scene.

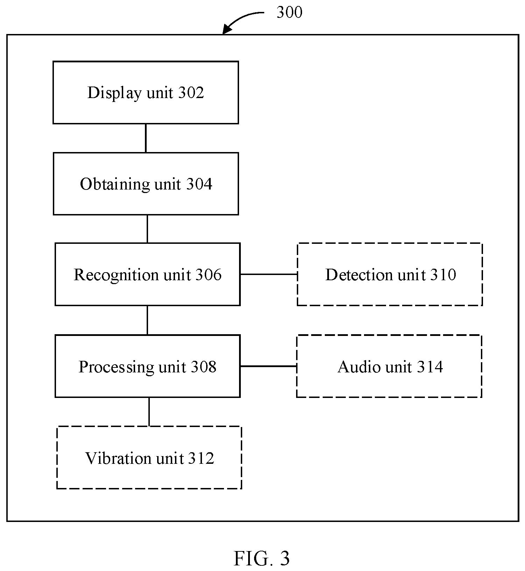

FIG. 3 is a schematic logical structural diagram of a terminal 300 according to an embodiment of this application. The terminal 300 includes a display unit 302, an obtaining unit 304, a recognition unit 306, and a processing unit 308. It should be understood that units in the terminal 300 may be implemented through software programming, or may be implemented by using a hardware circuit, or some units may be implemented through software programming and other units may be implemented by using a hardware circuit. It should be understood that the terminal 300 may be the terminal device 100 in FIG. 1. Further, a screen of the terminal 300 may be the touch display screen 136. The following describes functions of the units in the terminal 300.

The display unit 302 is configured to display a target picture, where the target picture includes a virtual object to be manipulated by using a detected gesture or a detected hand action. The obtaining unit 304 is configured to obtain F sets of hand images. The recognition unit 306 is configured to sequentially recognize locations of hand knuckles in the F sets of hand images, to obtain spatial locations of F groups of hand knuckles, where spatial locations of each group of hand knuckles are spatial locations of hand knuckles corresponding to one set of hand images, and F is an integer greater than 0. Spatial locations of hand knuckles corresponding to one set of hand images may include two-dimensional locations and depth information of all the hand knuckles in the set of hand images. In this way, three-dimensional locations are obtained. For example, spatial locations of one group of hand knuckles include three-dimensional locations of 21 knuckles. One set of hand images may be one frame of depth image, may include one frame of depth image and one frame of color image, or may be one frame of color image. The processing unit 308 is configured to perform a control operation corresponding to the spatial locations of the F groups of hand knuckles, where the control operation is used to adjust a location and/or a form of the virtual object in the target picture. The display unit 302 is further configured to display an adjusted target picture.

The display unit 302 may display a dynamic picture obtained after the location and/or the form of the virtual object in the target picture changes, may display an image captured by a rear-facing camera or a front-facing camera, may display a virtual hand image corresponding to a hand of a user, or may display another image. The processing unit 308 may determine the control operation corresponding to the spatial locations of the F groups of hand knuckles, and adjust, based on the control operation, the picture displayed by the display unit 302. It may be understood that the processing unit 308 may control, based on different control operations, the display unit 302 to display different pictures. The display unit 302 may be the touch display screen 136 in FIG. 1, or may be a non-touch display screen. This is not limited in this embodiment of this application. During actual application, the user may manipulate, by using a gesture or a hand movement, the virtual object in the picture displayed by the display unit 302. The terminal 300 may recognize the gesture or the hand movement of the user, and further convert the recognized gesture or hand movement into a control operation for adjusting the picture displayed by the display unit 302. A function of the obtaining unit 304 may be implemented by using the depth camera 156 and the color camera 158 in FIG. 1. During actual application, the depth camera 156 and the color camera 158 may synchronously obtain images through photographing, and obtain a set of hand images in each photographing. Both the recognition unit 306 and the processing unit 308 may be the processing unit 120 in FIG. 1. A set of hand images may include a frame of depth image and a frame of color image (for example, an RGB image) that are respectively obtained by using the depth camera and the color camera by synchronously photographing a same scene, may include only a frame of depth image obtained through photographing by using the depth camera, or may include only a frame of color image obtained through photographing by using the color camera. That the depth camera and the color camera synchronously photograph a same scene means that a time interval between a moment for photographing the same scene by using the depth camera and a moment for photographing the same scene by using the color camera is less than a time threshold. The time threshold may be 1 millisecond, 5 milliseconds, 10 milliseconds, or the like. Optionally, a color image and a depth image that are included in any set of hand images are images obtained by photographing a same scene at a same moment.

Optionally, after a set of hand images is obtained through photographing, the depth camera 156 and the color camera 158 may transmit the set of hand images to the recognition unit 306. The recognition unit 306 recognizes locations of hand knuckles in the set of hand images to obtain spatial locations of a group of hand knuckles, and transmits the spatial locations to the processing unit 308. The processing unit 308 may obtain the spatial locations of the group of hand knuckles, and then can determine a gesture type corresponding to the spatial locations of the group of hand knuckles and perform a control operation corresponding to the gesture type. In other words, the recognition unit 306 can recognize locations of hand knuckles in a set of hand images after obtaining the set of hand images, and then the processing unit 308 determines a gesture type corresponding to the set of hand images. The recognition unit 306 and the processing unit 308 may be different units, or may be the same unit (for example, the processing unit 120 in FIG. 1). It may be understood that, in this embodiment of this application, the recognition unit 306 may obtain spatial locations of a group of hand knuckles based on a set of hand images (including a frame of depth image), and then the processing unit 308 determines a gesture type corresponding to the set of hand images and a current spatial location of a hand of the user.

Optionally, after obtaining a plurality of sets of hand images through photographing, the depth camera 156 and the color camera 158 may transmit these sets of hand images to the recognition unit 306. The recognition unit 306 recognizes locations of hand knuckles in these sets of hand images, to obtain spatial locations of a plurality of groups of hand knuckles. "A plurality of" means two or more. It may be understood that the obtaining unit 304 may send one set of hand images to the recognition unit 306 each time, in other words, send one set of hand images to the recognition unit 306 after obtaining the set of hand images; or may send a plurality of sets of hand images to the recognition unit 306 each time, in other words, send a plurality of sets of hand images together to the recognition unit 306 after obtaining these sets of hand images.

Optionally, after obtaining a plurality of sets of hand images through photographing, the color camera 158 may transmit these sets of hand images to the recognition unit 306. The recognition unit 306 recognizes locations of hand knuckles in these sets of hand images, to obtain spatial locations of a plurality of groups of hand knuckles. Each set of hand images obtained through photographing by using the color camera 158 is one frame of color image. The recognition unit 306 may recognize locations of hand knuckles in a plurality of frames of hand images based on these frames of color images, to obtain spatial locations of a plurality of groups of hand knuckles.

It may be understood that when a set of hand images includes a frame of depth image, the recognition unit 306 recognizes locations of hand knuckles in the set of hand images, and may obtain spatial locations (three-dimensional locations) of a group of hand knuckles. When a set of hand images does not include a depth image, the recognition unit 306 recognizes locations of hand knuckles in at least two sets of hand images, and may obtain spatial locations (three-dimensional locations) of at least one group of hand knuckles. The recognition unit 306 may recognize the locations of hand knuckles in the F sets of hand images based on the F sets of hand images, to obtain the spatial location of the F groups of hand knuckles. When a set of hand images includes a depth image, F may be equal to 1. When a set of hand images does not include a depth image, F is at least 2.

It may be understood that any type of natural gesture may be represented as spatial locations of one group of hand knuckles, and any type of hand action may be represented as spatial locations of a plurality of groups of hand knuckles. On the contrary, spatial locations of one group of hand knuckles may be used to determine any type of natural gesture, and spatial locations of a plurality of groups of hand knuckles may be used to determine any type of hand action. A natural gesture is any gesture, that is, any gesture that can be made by the user. It may be understood that the terminal 300 may determine a gesture based on spatial locations of one group of hand knuckles, or determine a gesture sequence or a hand action based on spatial locations of a plurality of groups of hand knuckles, and further perform a control operation corresponding to the gesture or the hand action. The control operation corresponding to the spatial locations of the F groups of hand knuckles is a control operation corresponding to a gesture or a hand action that is determined based on the spatial locations of the F groups of hand knuckles. The terminal 300 may preset a correspondence between spatial locations of a group of hand knuckles and a control action, or may preset a correspondence between a control action and a combination of the spatial locations of the F groups of hand knuckles. During actual application, the user may manipulate, by using a gesture and a hand action, the virtual object in the picture displayed by the display unit 302, for example, adjust, by using the gesture or the hand action, the location or the form of the virtual object in the picture displayed by the display unit 202.

In this embodiment of this application, the terminal device determines a control operation of the user based on spatial locations of hand knuckles, so that all natural gestures and hand actions can be included, an operation is more natural, operation efficiency is higher, and human-computer interaction experience of the user is improved.

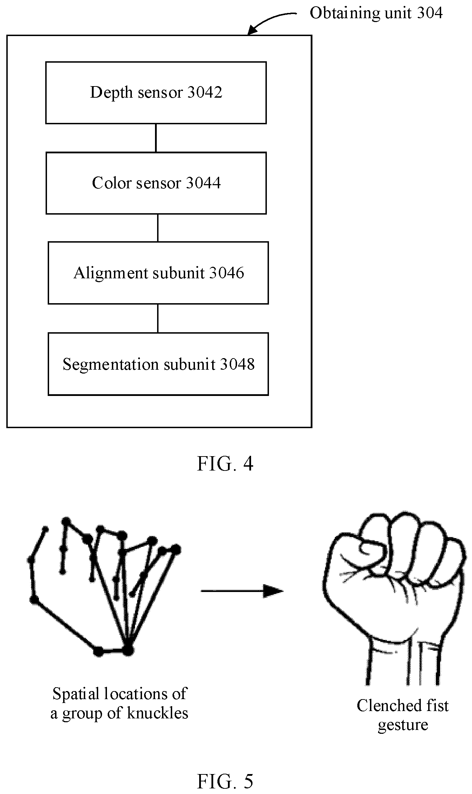

How the obtaining unit 304 obtains the F sets of hand images is not described in detail in FIG. 3. The following provides specific descriptions. In an optional implementation, as shown in FIG. 4, the obtaining unit 304 includes a color sensor 3042, a depth sensor 3044, an alignment subunit 3046, and a segmentation subunit 3048. The subunits in the obtaining unit 304 may be implemented through software programming, or may be implemented by using a hardware circuit, or some units may be implemented through software programming and other units may be implemented by using a hardware circuit. The obtaining unit 304 in FIG. 4 may not include the color sensor 3042. In other words, the color sensor is optional, and not mandatory.

The color sensor 3042 is configured to obtain an original color image through photographing. The depth sensor 3044 is configured to obtain an original depth image through photographing. The alignment subunit 3046 is configured to spatially align the original color image and the original depth image. The segmentation subunit 3048 is configured to separately perform hand segmentation on the original color image and the original depth image, to obtain a set of hand images. Functions of the alignment subunit 3046 and the segmentation subunit 3048 may be implemented by using the processing unit 120 in FIG. 1. The color sensor 3042 may be a sensor in the color camera 158 in FIG. 1, and the depth sensor 3044 may be a sensor in the depth camera 158 in FIG. 1. The color sensor 3042 and the depth sensor 3044 may obtain the images through synchronous photographing. The color sensor obtains the original color image, and the depth sensor obtains the original depth image. Resolution of the color sensor 3042 may be the same as or different from resolution of the depth sensor 3044. In other words, resolution of the original depth image may be the same as or different from resolution of the original color image. When the resolution of the original depth image is different from the resolution of the original color image, the alignment subunit 3046 may adjust, by using an image scaling algorithm (for example, a bilinear interpolation method), the two images to a same size. For example, the resolution of the color image is 800x1280, and the resolution of the depth image is 400x640. In this case, the alignment subunit 3046 scales down the color image to 400x640 through bilinear interpolation.

A spatial coordinate system for color image data is different from a spatial coordinate system for depth image data. An origin of the spatial coordinate system for the color image data is a color camera (an RGB camera), an origin of the spatial coordinate system for the depth image data is an infrared camera, and there is a corresponding error between the two spatial coordinate systems. Therefore, the original color image and the original depth image need to be spatially aligned. That the original color image and the original depth image are spatially aligned may be that the original color image remains unchanged and the original depth image is adjusted, to spatially align the original depth image and the original color image, or may be that the original depth image remains unchanged and the original color image is adjusted, to spatially align the original depth image and the original color image. Optionally, the alignment subunit 3046 may rotate and translate the original depth image depending on a rotation matrix and a translation matrix corresponding to the two cameras calibrated based on the depth sensor and the color sensor, to align the original depth image with the original color image. When the resolution of the original depth image is different from the resolution of the original color image, the alignment subunit 3046 or the processing unit 308 first adjusts the two images to the same size, and then spatially aligns the two images. When the resolution of the original depth image is the same as the resolution of the original color image, the alignment subunit 3046 directly spatially aligns the two images. The segmentation subunit 3048 is optional. The segmentation subunit 3048 is configured to extract, from the original color image, an image area in which a hand is located and extract, from the original depth image, an image area in which a hand is located. Alternatively, the obtaining unit 304 may not include the segmentation subunit 3048. In other words, the obtaining unit 304 may use a spatially aligned original color image and a spatially aligned original depth image as a target set of hand images, and send the target set of hand images to the recognition unit 306.

In this implementation, the original color image and the original depth image are spatially aligned. This can ensure that locations of hand knuckles in the color original image are consistent with locations of hand knuckles in the original depth image, and an implementation is simple.

How the recognition unit 306 recognizes locations of hand knuckles in a hand image is not described in detail in FIG. 3. The following provides specific descriptions.

In an optional implementation, the terminal 300 further includes: a detection unit 310, configured to detect, based on at least one of a color image and a depth image that are included in the target set of hand images, a location area in which a hand is located. The recognition unit 306 is configured to recognize locations of hand knuckles on the hand in the location area based on at least one of the color image and the depth image, to obtain spatial locations of a group of hand knuckles.

In an optional implementation, the terminal 300 further includes:
a detection unit 310, configured to detect a first location area in which a hand in a color image included in the target set of hand images is located. The recognition unit 306 is configured to recognize locations of hand knuckles on a hand in a second location area in a depth image included in the target set of hand images, to obtain spatial locations of a group of hand knuckles, where the second location area is an area that is in the depth image and that corresponds to the first location area. Considering that resolution of the depth image may be different from resolution of the color image, the second location area may be the same as or in specific proportion to the first location area.

The target set of hand images includes the color image and the depth image, and the target set of hand images is any set of images in the F sets of hand images. The depth image and the color image are images obtained by synchronously photographing a same scene. The detection unit 310 may be the processing unit 120 in FIG. 1. The detection unit 310 may detect, by using a trained detection network, the location area in which the hand in the color image is located, and input the detected first location area (a result of a location of the hand) to the recognition unit 306. The first location area may be represented by using a set of coordinates. The detection network is a network obtained by the processing unit 308 by training a large quantity of color image (RGB image) samples by using a deep learning method. The recognition unit 306 may recognize the locations of the hand knuckles in the depth image by using a trained recognition network, to obtain the spatial locations of the group of hand knuckles. Optionally, after obtaining the first location area and the depth image, the recognition unit 306 determines the second location area that is in the depth image and that corresponds to the first location area, and performs regression on hand knuckles in an image in the second location area by using the trained recognition network, to obtain the spatial locations of the group of hand knuckles. Optionally, after detecting the first location area, the detection unit 310 determines the second location area that is in the depth image and that corresponds to the first location area, and sends an image in the second location area to the recognition unit 306. The recognition unit 306 performs regression on hand knuckles in the image in the second location area by using the trained recognition network, to obtain the spatial locations of the group of hand knuckles. The recognition network is a network obtained by the processing unit 308 by training a large quantity of depth samples and by using a deep learning method. During actual application, the recognition unit 306 may obtain three-dimensional spatial locations of 21 hand knuckles by recognizing one depth image.

In an optional implementation, a detection unit 310 is configured to detect a first location area in which a hand in a color image included in the target set of hand images is located. The recognition unit 306 is configured to: recognize locations of hand knuckles on the hand in the first location area, to obtain spatial locations of a first group of hand knuckles; recognize locations of hand knuckles on a hand in a second location area in a depth image included in the target set of hand images, to obtain spatial locations of a second group of hand knuckles, where the second location area is an area that is in the depth image and that corresponds to the first location area; and merge the spatial locations of the first group of hand knuckles and the spatial locations of the second group of hand knuckles, to obtain spatial locations of a group of hand knuckles corresponding to the target set of hand images.

The target set of hand images includes the color image and the depth image, and the target set of hand images is any set of images in the F sets of hand images. The spatial locations of the hand knuckles obtained from the color image may be coordinates (two-dimensional coordinates) of all pixels, and the spatial locations of the hand knuckles obtained from the depth image may be coordinates of all pixels and distances (depth information) from all the hand knuckles to the depth sensor in the scene. It may be understood that the spatial locations of the hand knuckles obtained from the depth image include two-dimensional locations and depths information of the hand in the depth image. In this way, three-dimensional locations are obtained. During actual application, the recognition unit 306 may separately recognize the color image and the depth image, and merge two recognition results (spatial locations of two groups of hand knuckles), to obtain two-dimensional spatial locations of one group of hand knuckles. Optionally, the spatial locations of the first group of knuckles include 21 two-dimensional coordinates and are represented as a spatial location of a first hand knuckle to a spatial location of a twenty-first hand knuckle; and the spatial locations of the second group of knuckles include 21 three-dimensional coordinates and are represented as a three-dimensional spatial location of the first hand knuckle to a three-dimensional spatial location of the twenty-first hand knuckle. That the spatial locations of the first group of hand knuckles and the spatial locations of the second group of hand knuckles are merged may be that two-dimensional coordinates of the spatial locations of the two groups of hand knuckles are merged and a third dimensional coordinate of each hand knuckle remains unchanged. The third dimensional coordinate may be a distance from the hand knuckle to the depth sensor in the scene. Optionally, after obtaining the first location area and the depth image, the recognition unit 306 determines the second location area that is in the depth image and that corresponds to the first location area, and performs regression on hand knuckles in an image in the second location area by using a trained recognition network, to obtain spatial locations of 21 hand knuckles and 21 confidence levels. The 21 confidence levels one-to-one correspond to the spatial locations of the 21 hand knuckles. After obtaining the first location area and the color image, the recognition unit 306 performs regression on hand knuckles in an image in the first location area by using the trained recognition network, to obtain spatial locations of 21 hand knuckles and 21 confidence levels. The 21 confidence levels one-to-one correspond to the spatial locations of the 21 hand knuckles. If a spatial location of a hand knuckle corresponds to a higher confidence level, it indicates that the spatial location of the hand knuckle is more accurate. It may be understood that each hand knuckle corresponds to two spatial locations. One is a three-dimensional spatial location obtained by the recognition unit 306 by recognizing the depth image, and the other is a two-dimensional spatial location obtained by the recognition unit 306 by recognizing the color image. The recognition unit 306 may merge two spatial locations corresponding to a same hand knuckle into one spatial location of the hand knuckle. For example, two spatial locations corresponding to one hand knuckle are (A, B) and (C, D, E). If a confidence level for (A, B) is higher than a confidence level for (C, D, E), the two spatial locations are merged into (A, B, E). Otherwise, the two spatial locations are merged into (C, D, E).

In this implementation, the spatial locations of the hand knuckles obtained from the depth image and the spatial locations of the hand knuckles obtained from the color image are merged, so that the spatial locations of the hand knuckle can be determined more accurately.

In an optional implementation, a detection unit 308 is configured to detect a location area in which a hand in a depth image is located. The recognition unit 306 is configured to recognize locations of hand knuckles on the hand in the location area, to obtain spatial locations of a group of hand knuckles. The depth image is the target set of hand images, namely, any set of hand images in the F sets of hand images.

The detection unit 308 may detect, by using a trained detection network, the area in which the hand in the depth image is located, and input the detected location area (a result of a location of the hand) to the recognition unit 306. The detection network may be a network obtained by the processing unit 308 by training by using a large quantity of depth image samples by using a deep learning method. The recognition unit 306 may recognize the locations of the hand knuckles in the depth image by using a trained recognition network, to obtain the spatial locations of the group of hand knuckles. Optionally, after obtaining the depth image and the location area in which the hand in the depth image is located, the recognition unit 306 performs regression on hand knuckles in an image in the location area by using the trained recognition network, to obtain the spatial locations of the group of hand knuckles. Optionally, after detecting the location area in which the hand in the depth image is located, the detection unit 308 sends an image in the location area to the recognition unit 306. The recognition unit 306 performs regression on hand knuckles in the image in the location area by using the trained recognition network, to obtain the spatial locations of the group of hand knuckles.

In this implementation, spatial locations of hand knuckles in each set of hand images can be quickly determined based on the depth image.

In an optional implementation, the recognition unit 306 recognizes locations of hand knuckles based on a plurality of frames of color images, to obtain spatial locations of one or more groups of knuckles. In this implementation, the terminal 300 may include only the color sensor but does not include the depth sensor.

How the processing unit 308 determines a control operation corresponding to the spatial locations of the F groups of hand knuckles is not described in detail in FIG. 3. The following provides specific descriptions by using several embodiments.

### Embodiment 1

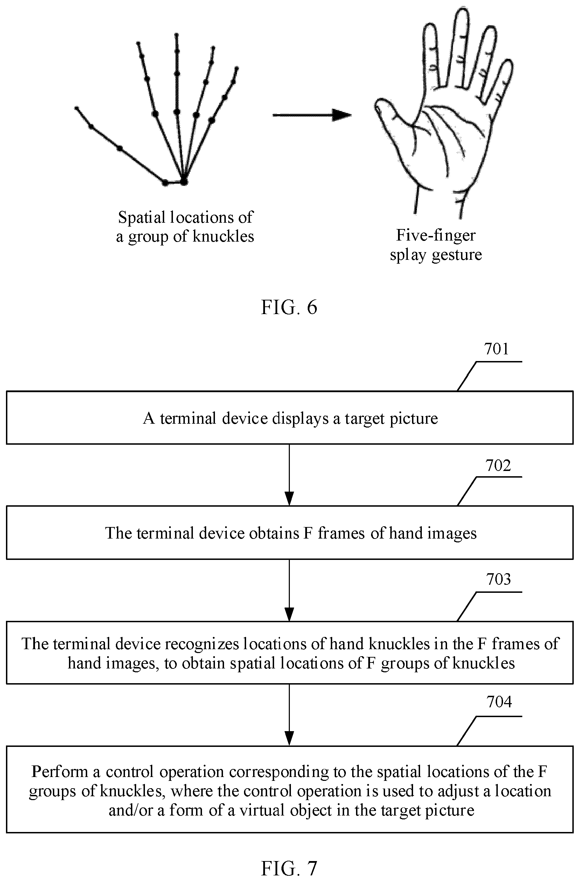

The processing unit 308 obtains spatial locations of a group of hand knuckles from the recognition unit 306, calculates angles between four hand knuckles on each finger of a hand based on the spatial locations of the group of hand knuckles, determines a bending status of each finger based on the angles between the four hand knuckles on each finger, determines, based on the bending status of each finger of the hand, a gesture type corresponding to the spatial locations of the group of hand knuckles, and performs a control operation corresponding to the gesture type. In this embodiment, the processing unit 308 may determine a bending state of each finger of a hand based on spatial locations of a group of hand knuckles, then determine, based on the bending state of each finger, a gesture type corresponding to the spatial locations of the group of hand knuckles, and further perform a control operation corresponding to the gesture type. FIG. 5 is a schematic diagram of determining a clenched fist gesture based on spatial locations of a group of hand knuckles according to an embodiment of this application. Each dot represents one hand knuckle. As shown in FIG. 5, the processing unit 308 may determine the clenched fist gesture based on the spatial locations of the group of hand knuckles in FIG. 5. FIG. 6 is a schematic diagram of determining a five-finger splay gesture based on spatial locations of a group of hand knuckles according to an embodiment of this application. Each dot represents one hand knuckle. As shown in FIG. 6, the processing unit 308 may determine the five-finger splay gesture based on the spatial locations of the group of hand knuckles in FIG. 6. After determining the control operation, the processing unit 308 may correspondingly adjust the picture displayed by the display unit 302, for example, adjust the location or the form of the virtual object in the picture displayed by the display unit 302.

### Embodiment 2

The processing unit 308 obtains the spatial locations of the F groups of hand knuckles from the recognition unit 306, determines M gesture types corresponding to the spatial locations of the F groups of hand knuckles, and performs a control operation corresponding to the M gesture types. Optionally, F is equal to M, and M is greater than 1. In other words, the processing unit 308 may determine one gesture type based on spatial locations of one group of hand knuckles. Spatial locations of a group of hand knuckles may not correspond to any gesture type. Therefore, a quantity of gesture types determined by the processing unit 308 based on the spatial locations of the F groups of hand knuckles may be less than F. Optionally, M is less than F, M is an integer greater than 0, and F is an integer greater than 1. For example, a hand changing from a clenched fist gesture to a five-finger splay gesture corresponds to spatial locations of 20 groups of hand knuckles. The processing unit 308 determines only the clenched fist gesture and the five-finger splay gesture based on the spatial locations of the 20 groups of hand knuckles. The processing unit 308 may obtain spatial locations of one group of hand knuckles from the recognition unit 306 each time, and determine one gesture type corresponding to the spatial locations of the group of hand knuckles. A specific implementation in which the processing unit 308 determines one gesture type based on spatial locations of each group of hand knuckles is the same as the implementation in Embodiment 1. The processing unit 308 may obtain spatial locations of a plurality of groups of hand knuckles from the recognition unit 306 each time, and determine one or more gesture types corresponding to the spatial locations of the plurality of groups of hand knuckles.

Optionally, the control operation corresponding to the M gesture types is unrelated to a gesture type change in the M gesture types. In other words, the control operation corresponding to the M gesture types is unrelated to an order for determining all of the M gesture types. The gesture type change in the M gesture types is the order for determining all of the M gesture types. All of the F sets of hand images are obtained in particular order, and therefore the M gesture types are also determined in particular order. For example, the processing unit 308 sequentially determines a first gesture type, a second gesture type, and a third gesture type, and the three gesture types correspond to a target control operation. If the processing unit 308 sequentially determines the second gesture type, the first gesture type, and the third gesture type, and the three gesture types also correspond to the target control operation.

Optionally, the control operation corresponding to the M gesture types is related to a gesture type change in the M gesture types. That the processing unit 308 performs the control operation corresponding to the M gesture types may be that the processing unit 308 determines, based on the gesture type change in the M gesture types, the control operation corresponding to the M gesture types, where M is greater than 1. For example, the processing unit 308 sequentially determines a first gesture type, a second gesture type, and a third gesture type, and the processing unit 308 determines, based on a gesture type change in the three gesture types, that the three gesture types correspond to a first control operation. The processing unit 308 sequentially determines the second gesture type, the first gesture type, and the third gesture type, and the processing unit 308 determines, based on a gesture type change in the three gesture types, that the three gesture types correspond to a second control operation. The second control operation is different from the first control operation. It may be understood that the processing unit 308 may determine at least two gesture types corresponding to the spatial locations of the F groups of hand knuckles, and perform, based on a gesture type change in the at least two gesture types, a control operation corresponding to the at least two gesture types.

The processing unit 308 may preset a correspondence between a gesture sequence and a control operation. After determining a gesture type, the processing unit 308 may combine the gesture type with one or more previously obtained gesture types, to obtain a gesture sequence. When the gesture sequence corresponds to a control operation, the processing unit 308 performs the control operation. When the gesture sequence does not correspond to any control operation, the processing unit 308 determines a gesture type corresponding to spatial locations of a next group of hand knuckles, and repeats the foregoing operations. It can be learned that the processing unit 308 may obtain spatial locations of one group of hand knuckles each time, and determine a gesture type corresponding to the spatial locations of the group of hand knuckles. Alternatively, the processing unit 308 may obtain spatial locations of a plurality of groups of hand knuckles each time, and determine a gesture sequence based on the spatial locations of the plurality of groups of hand knuckles. During actual application, the user may perform a control operation by using a plurality of continuous gestures. For example, the user may implement a control operation on the virtual object by using continuous gestures (a gesture sequence) from a clenched fist gesture to a five-finger splay gesture.

### Embodiment 3

The processing unit 308 obtains the spatial locations of the F groups of hand knuckles from the recognition unit 306, determines a spatial location change in hand knuckles between hand knuckle groups, based on the spatial locations of the F groups of hand knuckles, and adjusts, based on the spatial location change, the location of the virtual object in the picture displayed by the display unit 302, and/or adjusts, based on the spatial location change, the form of the virtual object in the picture displayed by the display unit 302, where F is an integer greater than 1. Specifically, a method for adjusting, based on the spatial location change, the location of the virtual object in the picture displayed by the display unit 302 is as follows: determining a movement track of a hand based on the spatial location change; and moving the virtual object along the movement track of the hand, where a movement track of the virtual object is consistent with the movement track of the hand. That a movement track of the virtual object is consistent with the movement track of the hand means that the movement track of the virtual object has a same shape as the movement track of the hand and has a size that is in proportion to a size of the movement track of the hand. For example, the hand of the user moves rightward by 20 centimeters, and the virtual object moves rightward by 5 centimeters. The hand of the user moves leftward by 30 centimeters, and the virtual object moves leftward by 7.5 centimeters. A spatial location of the hand corresponds to a location of the virtual object. In other words, a spatial location of the hand is mapped onto a spatial location of the virtual object, so that the user feels that the hand be in direct contact with the virtual object.

After obtaining spatial locations of a group of hand knuckles, the processing unit 308 may calculate a spatial location change (a hand displacement) in the spatial locations of the group of hand knuckles relative to previously obtained spatial locations of a group of hand knuckles, and adjust, based on the spatial location change, the form of the virtual object in the picture displayed by the display unit 302. Optionally, the terminal 300 further includes a vibration unit 312, configured to perform vibration, where a vibration strength of the vibration unit 312 is positively correlated or negatively correlated with a distance from the hand to the terminal 300. Optionally, a longer distance from the hand to the terminal 300 indicates a lower vibration strength of the vibration unit 312. Optionally, a shorter distance from the hand to the terminal 300 indicates a lower vibration strength of the vibration unit 312. During actual application, the vibration unit 312 may adjust the vibration strength of the vibration unit 312 based on the distance from the hand to the terminal 300. Specifically, a method for adjusting, based on the spatial location change, the form of the virtual object in the picture displayed by the display unit 302 is as follows: determining a hand action based on the spatial location change; and performing an adjustment operation corresponding to the hand action, where the adjustment operation is used to adjust the form of the virtual object in the picture displayed by the display unit 302. Optionally, the display unit 302 displays, in the picture displayed by the display unit 302, an image (a virtual hand) corresponding to a gesture or a hand action of the user. The adjusting the form of the virtual object in the picture displayed by the display unit 302 may be adjusting a direction, a size, a shape, and the like of the virtual object in the picture displayed by the display unit 302. Optionally, the picture displayed by the display unit 302 includes the virtual hand obtained by mapping the hand of the user onto the picture. The user may use the virtual hand as the hand of the user to correspondingly operate the virtual object in the picture. In other words, operating the hand of the user is equivalent to operating the virtual hand. In other words, an action of the virtual hand is consistent with a hand action of the user. The terminal 300 may obtain three-dimensional spatial locations of hand knuckles based on a single frame of image, obtain a spatial location change in hand knuckles based on a plurality of consecutive frames of images, and manipulate, based on a control operation determined based on the spatial location change, the virtual object to have a change in the location or the form.

### Embodiment 4

The processing unit 308 obtains the spatial locations of the F groups of hand knuckles from the recognition unit 306, determines M gesture types corresponding to the spatial locations of the F groups of hand knuckles, and performs a control operation based on the spatial locations of the F groups of hand knuckles and the M gesture types, where F is greater than 1, and M is less than or equal to F and is at least 1. The following describes several specific implementations for performing a control operation based on the spatial locations of the F groups of hand knuckles and the M gesture types.

Optionally, after determining a target gesture type based on spatial locations of a group of hand knuckles in the spatial locations of the F groups of hand knuckles, the recognition unit 306 determines a spatial location change in hand knuckles between hand knuckle groups based on the spatial locations of the F groups of hand knuckles, and performs the control operation based on the target gesture type and the spatial location change. The target gesture type is used to adjust the location of the virtual object in the picture displayed by the display unit 302. The target gesture may be a clenched fist gesture, a five-finger splay gesture, or the like. Specifically, after the recognition unit 306 determines the target gesture type based on the spatial locations of the group of hand knuckles, when all gesture types determined based on spatial locations of one or more groups of hand knuckles before the group of hand knuckles are the target gesture, the recognition unit 306 determines a spatial location change in hand knuckles between hand knuckle groups based on the spatial locations of the group of hand knuckles and the spatial locations of the one or more groups of hand knuckles, and performs the control operation based on the spatial location change.

Optionally, the recognition unit 306 determines a spatial location change in hand knuckles between hand knuckle groups based on the spatial locations of the F groups of hand knuckles, and performs the control operation based on a gesture type change in the M gesture types and the spatial location change. The processing unit 308 may preset a correspondence between a control operation and a combination of a gesture type change and a spatial location change. The processing unit 308 may determine, based on the correspondence, control operations corresponding to different combinations of gesture type changes and spatial location changes, and further adjust the location and/or the form of the virtual object in the picture displayed by the display unit 302.

Optionally, the recognition unit 306 performs the control operation based on a gesture type change in the M gesture types and the spatial locations of the F groups of hand knuckles. The processing unit 308 may preset a correspondence between a control operation and a combination of a gesture type change and the spatial locations of the F groups of hand knuckles. The processing unit 308 may determine, based on the correspondence, control operations corresponding to different combinations of gesture type changes and the spatial locations of the F groups of hand knuckles, and further adjust the location and/or the form of the virtual object in the picture displayed by the display unit 302.

It may be understood that the terminal 300 may recognize complex continuous actions by using gesture types recognized from a plurality of consecutive sets of hand images and spatial location changes in hand knuckles determined based on the plurality of sets of hand images, and further manipulate the virtual object to have continuous changes. During actual application, the terminal 300 may determine various complex hand actions of the user in combination with a gesture type and a spatial location change in hand knuckles, to satisfy requirements in different application scenarios.

During actual application, after determining a control operation based on a gesture or a hand action of the user, the terminal 300 may implement interaction with the gesture or the hand action of the user by performing vibration or playing specific music, in other words, respond to the gesture or the hand action of the user by performing vibration or playing specific music, to enhance an operation sensation of the user. The following describes specific implementations.

The terminal 300 in FIG. 3 may further include a vibration unit 312 and an audio unit 314. The vibration unit 312 may be the vibration circuit 160 in FIG. 1. The audio unit 314 may be the audio circuit 128 in FIG. 1. The vibration unit 312 is configured to provide a vibration effect corresponding to a control operation determined by the processing unit 308. The audio unit 314 is configured to provide an audio effect corresponding to a control operation determined by the processing unit 308. One control operation may correspond to only one vibration effect, may correspond to only one audio special effect, or may correspond to both one vibration effect and one audio special effect. For example, after the terminal device determines a control operation corresponding to a gun gesture, the terminal device imitates a vibration effect corresponding to recoil force of a real pistol and makes a shooting sound (audio special effect) of the real pistol. The processing unit 308 may preset a correspondence between a control operation and a vibration effect, may preset a correspondence between a control operation and an audio special effect, or may preset a correspondence between a control operation and a combination of a vibration effect and an audio special effect. In a specific implementation, after determining a control operation, the processing unit 308 may determine, based on the correspondence between a control operation and a vibration effect, a vibration effect corresponding to the control operation, and control the vibration unit 312 to perform vibration to achieve the vibration effect. In a specific implementation, after determining a control operation, the processing unit 308 may determine, based on the correspondence between a control operation and an audio special effect, an audio special effect corresponding to the control operation, and control the audio unit 314 to play corresponding music to achieve the audio special effect. In a specific implementation, after determining a control operation, the processing unit 308 may determine, based on a correspondence between a control operation and a combination of a vibration effect and an audio special effect, an audio special effect and a vibration effect that correspond to the control operation, and control the audio unit 314 to play corresponding music to achieve the audio special effect, and control the vibration unit 312 to perform vibration to achieve the vibration effect. During actual application, the terminal may provide a different vibration feedback form or audio special effect based on a detected gesture type.

In an implementation, after a gesture of the user is detected, a corresponding vibration effect and a corresponding music special effect are triggered, so that an immersive sensation of the user can be enhanced, and user experience can be improved.

During actual application, the user may manipulate, by using a gesture or a hand action, the location or the form of the virtual object in the picture displayed by the terminal 300. This requires that the camera on the terminal 300 can obtain a hand image of the user through photographing. In other words, this requires that a gesture operation of the user fall within a proper manipulation range. In this way, a gesture or a hand action of the user can be recognized based on the hand image, and then the location or the form of the virtual object in the picture displayed by the terminal 300 can be adjusted. The following describes how to notify, to the user, that a gesture operation of the user goes beyond a manipulation range.

In a specific implementation, the camera (the depth camera and the color camera) on the terminal 300 obtain a hand image through photographing. The recognition unit 306 recognizes locations of hand knuckles in the hand image, to obtain spatial locations of one or more groups of hand knuckles. The processing unit 308 determines a control operation corresponding to the spatial locations of the one or more groups of hand knuckles, and performs the control operation. When a hand cannot be detected from a set of hand images, it indicates that a gesture operation of the user goes beyond the manipulation range. It may be understood that a necessary condition for the processing unit 308 to determine the control operation is that the recognition unit 306 can recognize a specific quantity of hand knuckles from the hand image obtained by using the camera through photographing. Optionally, when the recognition unit 306 recognizes a relatively small quantity of hand knuckles or recognizes no hand knuckle from a set of hand images obtained by using the camera through photographing, the recognition unit 306 may notify, to the user, that a gesture operation of the user goes beyond the manipulation range, to indicate the user to perform a manipulation operation again within the proper manipulation range. When a quantity of hand knuckles recognized from a reference set of hand images is less than a quantity threshold, the terminal 300 notifies that a gesture operation goes beyond the manipulation range, where the reference set of hand images is any set of images in the F sets of hand images, that is, any set of hand images obtained by the obtaining unit 304. The quantity threshold may be 10, 12, 15, or the like. In a specific implementation, the recognition unit 306 recognizes locations of hand knuckles in the reference set of hand images, to obtain spatial locations of a group of hand knuckles, and transmits the spatial locations to the processing unit 308. After determining that a quantity of spatial locations of hand knuckles included in the spatial locations of the group of hand knuckles is less than the quantity threshold, the processing unit 308 controls the vibration unit 312 to provide a notification by using a vibration effect and/or controls the audio unit 314 to provide a notification by using an audio special effect.

Optionally, when the recognition unit 306 recognizes the locations of the hand knuckles in the F sets of hand images, and when a quantity of hand knuckles in each of K sets of hand images is less than the quantity threshold, the user is notified that a gesture operation of the user goes beyond the manipulation range. The K sets of hand images are included in the F sets of hand images. K is less than or equal to F, and is at least 1.

Optionally, when the detection unit 310 detects a location area in which a hand is located in each set of hand images in the F sets of hand images, and when no hand or no complete hand is detected in K sets of hand images, the user is notified that a gesture operation of the user goes beyond the manipulation range. The K sets of hand images are included in the F sets of hand images. K is less than or equal to F, and is at least 1. In a specific implementation, when the detection unit 310 detects a hand in a set of hand images, and when no hand is detected or no complete hand is detected in the set of hand images, the detection unit 310 notifies, to the processing unit 308, that the detection unit 310 detects no hand. The processing unit 308 controls the vibration unit 312 to provide a notification by using a vibration effect and/or controls the audio unit 314 to provide a notification by using an audio special effect.

In this implementation, after detecting that a current set of hand images does not include a hand image or the set of hand images does not include a complete hand image, the terminal device notifies, to the user, that a gesture operation goes beyond the operation range, and can notify the user in a timely manner to perform a manipulation operation again.

Based on the terminal device 100 in FIG. 1. an embodiment of this application provides a gesture-based manipulation method. As shown in FIG. 7, the method may include the following steps.

701: The terminal device displays a target picture.

The target picture includes a virtual object to be manipulated by using a detected gesture or a detected hand action. The target picture may include an image captured by a rear-facing camera on the terminal device.

702: The terminal device obtains F sets of hand images.

A front-facing camera (a depth camera and/or a color camera) on the terminal device may capture a hand image of a user, to determine a gesture or a hand action of the user. The terminal device may obtain the F sets of hand images by synchronously photographing a hand of the user by using the depth camera and the color camera, may obtain the F sets of hand images by photographing a hand of the user by using only the depth camera, or may obtain F frames of color images by photographing a hand of the user by using only the color camera. F is an integer greater than 0. The F sets of hand images may be F frames of depth images, may be F frames of color images, or may be F image combinations. Each image combination includes one frame of depth image and one frame of color image. When a set of hand images includes a frame of depth image, F may be equal to 1, or may be greater than 1. When a set of hand images does not include a depth image, F is at least 2.

703: The terminal device recognizes locations of hand knuckles in the F sets of hand images, to obtain spatial locations of F groups of hand knuckles.

Spatial locations of any group of hand knuckles in the spatial locations of the F groups of hand knuckles are spatial locations of hand knuckles on a hand in a set of hand images.

704: Perform a control operation corresponding to the spatial locations of the F groups of hand knuckles, where the control operation is used to adjust a location and/or a form of the virtual object in the target picture.

In this embodiment of this application, the terminal device determines the control operation of the user based on the spatial locations of the hand knuckles, so that all natural gestures and continuous hand actions can be included, an operation is more natural, operation efficiency is higher, and human-computer interaction experience of the user is improved.

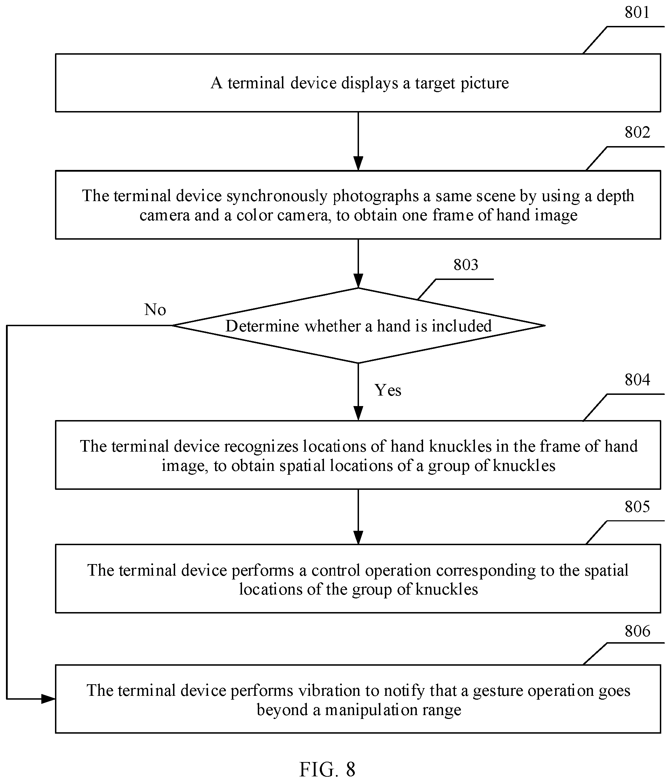

Based on the terminal device 100 in FIG. 1, an embodiment of this application provides another gesture-based manipulation method. As shown in FIG. 8, the method may include the following steps.

801: The terminal device displays a target picture.

The target picture includes a virtual object to be manipulated by using a detected gesture or a detected hand action. The target picture may include an image obtained by the terminal device by using a rear-facing camera. The target picture may be a picture of an application, for example, a picture of an AR game or a VR game.

802: The terminal device obtains a set of hand images by synchronously photographing a same scene by using a depth camera and a color camera.

The depth camera obtains a depth image by photographing the scene, and the color camera obtains a color image by photographing the scene. Optionally, after obtaining the set of hand images, the terminal device performs processing such as de-noising and hand segmentation on the set of hand images. Optionally, after obtaining the set of hand images, the terminal device spatially aligns the depth image and the color image that are included in the set of hand images.

803: The terminal device detects whether the set of hand images includes a hand.

If the set of hand images includes a hand, 804 is performed. If the set of hand images does not include a hand, 806 is performed.

804: The terminal device recognizes locations of hand knuckles in the set of hand images, to obtain spatial locations of a group of hand knuckles.

How to recognize locations of hand knuckles in a hand image is described in the foregoing embodiments. Details are not described herein again.

805: The terminal device performs a control operation corresponding to the spatial locations of the group of hand knuckles.

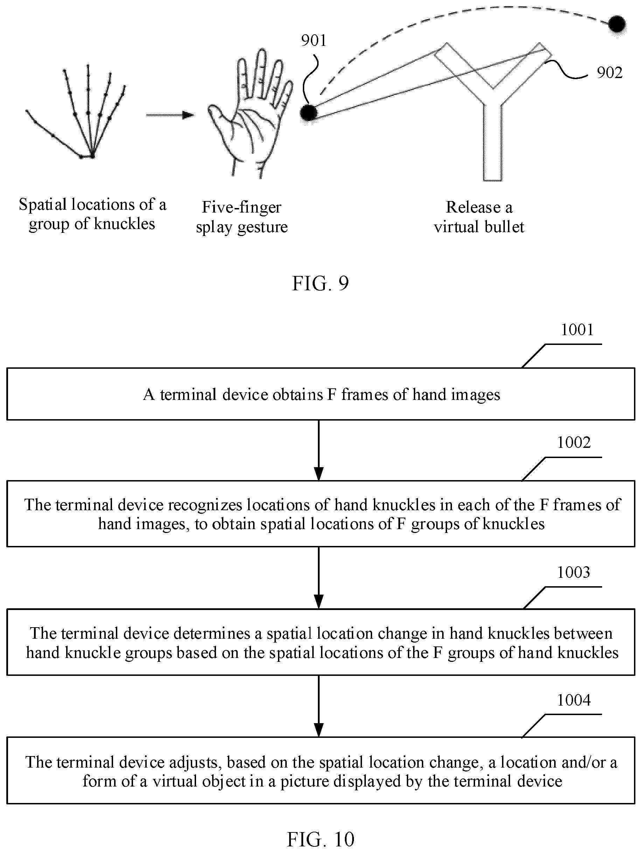

The control operation is used to adjust a location and/or a form of the virtual object in the target picture. That the terminal device performs a control operation corresponding to the spatial locations of the group of hand knuckles may be that the terminal device determines a gesture type corresponding to the spatial locations of the group of hand knuckles and performs a control operation corresponding to the gesture type. The terminal device may preset a correspondence between a gesture type and a control operation, and may determine, based on the correspondence, a control operation corresponding to each gesture type. A method for determining, by the terminal device, a gesture type corresponding to spatial locations of a group of hand knuckles is the same as that in the foregoing embodiments. Details are not described herein again. FIG. 9 is a schematic diagram of releasing a bullet by using a five-finger splay gesture according to an embodiment of this application. As shown in FIG. 9, spatial locations of hand knuckles in the figure are spatial locations that are of a group of hand knuckles and that are obtained by the terminal device based on a set of hand images. The five-finger splay gesture in the figure is a gesture type determined by the terminal device based on the spatial locations of the group of hand knuckles, 901 in the figure represents a bullet (a virtual object) in a picture displayed by the terminal device, 902 in the figure represents a slingshot in the picture, and a dashed line represents a movement track of the bullet. For example, in a picture displayed by the terminal device, the bullet is in a to-be-shot state, and the terminal device photographs a hand of a user to obtain a set of hand images. After the five-finger splay gesture is determined based on the set of hand images, the terminal device displays a picture in which the bullet is being shot, that is, displays a picture in which the bullet moves along the movement track in FIG. 9.

Optionally, step 805 may be replaced with the following operation: The terminal device determines a gesture type corresponding to the set of spatial locations, and combines the gesture type with one or more previously obtained gesture types, to obtain a gesture sequence. When the gesture sequence corresponds to a control operation, the terminal device performs the control operation. When the gesture sequence does not correspond to any control operation, the terminal device determines a gesture type corresponding to spatial locations of a next group of hand knuckles, and repeats the foregoing operations. The terminal device may preset a correspondence between at least one gesture sequence and a control operation, and may determine, based on the correspondence, a control operation corresponding to each gesture sequence.

Optionally, after determining the control operation, the terminal device implements a vibration effect and/or an audio special effect corresponding to the control operation. One control operation may correspond to only one vibration effect, may correspond to only one audio effect, or may correspond to both one vibration effect and one audio special effect. The terminal device may preset a correspondence between a control operation and a vibration effect, may preset a correspondence between a control operation and an audio special effect, or may preset a correspondence between a control operation and a combination of a vibration effect and an audio special effect. For example, after the terminal device determines a control operation corresponding to a gun gesture, the terminal device imitates a vibration effect corresponding to recoil force of a real pistol and makes a shooting sound (audio special effect) of the real pistol.

806: The terminal device performs vibration to notify that a gesture operation goes beyond a manipulation range.

In this embodiment of this application, the terminal device may determine the gesture type of the user based on the spatial locations of the hand knuckles, and then perform the corresponding control operation. In this way, a gesture recognition success rate is high.

Based on the terminal device 100 in FIG. 1, an embodiment of this application provides another gesture-based manipulation method. As shown in FIG. 10, the method may include the following steps.

1001: The terminal device obtains F sets of hand images.

The terminal device obtains a set of hand images by synchronously photographing a same scene by using a depth camera and a color camera, and obtains the F sets of hand images by synchronously photographing the same scene F consecutive times. F is an integer greater than 1.

1002: The terminal device recognizes locations of hand knuckles in each of the F sets of hand images, to obtain spatial locations of F groups of hand knuckles.

Optionally, once the terminal device obtains one set of hand images, the terminal device recognizes locations of hand knuckles in one frame of image, to obtain spatial locations (three-dimensional spatial locations) of a group of hand knuckles. Optionally, after obtaining the F sets of hand images, the terminal device starts to recognize locations of hand knuckles in the F sets of images, to obtain spatial locations of F groups of hand knuckles.

1003: The terminal device determines a spatial location change in hand knuckles between hand knuckle groups based on the spatial locations of the F groups of hand knuckles.

Spatial locations of hand knuckles included in spatial locations of one group of hand knuckles may be a spatial location of a first hand knuckle to a spatial location of a twenty-first hand knuckle. That the terminal device calculates a spatial location change in hand knuckles based on spatial locations of two groups of hand knuckles may be that the terminal device performs subtraction between spatial locations of one group of hand knuckles and spatial locations of the other group of hand knuckles, to obtain a spatial location change in each hand knuckle.

1004: The terminal device adjusts, based on the spatial location change, a location and/or a form of a virtual object in a picture displayed by the terminal device.

The picture displayed on a display screen or a display of the terminal device includes at least one virtual object, and a user may adjust the at least one virtual object in the picture by using a gesture or a hand action. Specifically, a method for adjusting, by the terminal device based on the spatial location change, the location of the virtual object in the picture displayed by the terminal device is as follows: determining a movement track of a hand based on the spatial location change; and moving the virtual object along the movement track of the hand, where a movement track of the virtual object is consistent with the movement track of the hand. That a movement track of the virtual object is consistent with the movement track of the hand means that the movement track of the virtual object has a same shape as the movement track of the hand and has a size that is in proportion to a size of the movement track of the hand. For example, the hand of the user moves rightward by 20 centimeters, and the virtual object moves rightward by 5 centimeters. The hand of the user moves leftward by 30 centimeters, and the virtual object moves leftward by 7.5 centimeters. A spatial location of the hand corresponds to a location of the virtual object. In other words, a spatial location of the hand is mapped onto a spatial location of the virtual object, so that the user feels that the hand be in direct contact with the virtual object. Optionally, the terminal device maps the movement track of the hand onto the picture, to obtain a picture in which a virtual hand moves. The user may use the virtual hand as the hand of the user to correspondingly operate the virtual object in the picture. In other words, operating the hand of the user is equivalent to operating the virtual hand. In other words, an action of the virtual hand is consistent with a hand action of the user. After obtaining spatial locations of a group of hand knuckles, the terminal device may calculate a spatial location change (a hand displacement) in the spatial locations of the group of hand knuckles relative to previously obtained spatial locations of a group of hand knuckles, and correspondingly move the virtual object based on the spatial location change.

Specifically, a method for adjusting, based on the spatial location change, the form of the virtual object in the picture displayed by the terminal device is as follows: determining a hand action based on the spatial location change; and performing an adjustment operation corresponding to the hand action, where the adjustment operation is used to adjust the form of the virtual object in the picture displayed by the terminal device. The adjusting the form of the virtual object in the picture displayed by the terminal device may be adjusting a direction, a size, a shape, and the like of the virtual object in the picture displayed by the terminal device. Optionally, the terminal device maps the hand action onto the picture, to obtain an action that is of a virtual hand and that is consistent with the hand action. The user may use the virtual hand as the hand of the user to correspondingly operate the virtual object in the picture. In other words, operating the hand of the user is equivalent to operating the virtual hand. In other words, an action of the virtual hand is consistent with a hand action of the user. During actual application, the terminal device may obtain three-dimensional spatial locations of hand knuckles based on a single frame of image, obtain a spatial location change in hand knuckles based on a plurality of consecutive frames of images, and manipulate, based on a control operation determined based on the spatial location change, the virtual object to have a corresponding change in the location or the form.

1103 and 1004 may be replaced with the following operations: The terminal device determines M gesture types corresponding to the spatial locations of the F groups of hand knuckles, and the terminal device adjusts, based on the M gesture types and the spatial locations of the F groups of hand knuckles, a location and/or a form of a virtual object in a picture displayed by the terminal device. The following describes specific implementations.

In an optional implementation, after determining a target gesture type based on spatial locations of one group of hand knuckles in the spatial locations of the F groups of hand knuckles, the terminal device determines a spatial location change in hand knuckles between hand knuckle groups based on the spatial locations of the F groups of hand knuckles, and performs a control operation based on the target gesture type and the spatial location change. The target gesture type is used to adjust the location of the virtual object in the picture displayed by the display unit 302. The target gesture may be a clenched fist gesture, a five-finger splay gesture, or the like. Specifically, after the terminal device determines the target gesture type based on the spatial locations of the group of hand knuckles, when all gesture types determined based on spatial locations of one or more groups of hand knuckles before the group of hand knuckles are the target gesture, the terminal device determines a spatial location change in hand knuckles between hand knuckle groups based on the spatial locations of the group of hand knuckles and the spatial locations of the one or more groups of hand knuckles, and performs a control operation based on the spatial location change.

In an optional implementation, the terminal device determines a spatial location change in hand knuckles between hand knuckle groups based on the spatial locations of the F groups of hand knuckles, and performs a control operation based on a gesture type change in the M gesture types and the spatial location change. The processing unit 308 may preset a correspondence between a control operation and a combination of a gesture type change and a spatial location change. The processing unit 308 may determine, based on the correspondence, control operations corresponding to different combinations of gesture type changes and spatial location changes, and further adjust the location and/or the form of the virtual object in the picture displayed by the display unit 302.

In an optional implementation, the terminal device performs a control operation based on a gesture type change in the M gesture types and the spatial locations of the F groups of hand knuckles. The processing unit 308 may preset a correspondence between a control operation and a combination of a gesture type change and the spatial locations of the F groups of hand knuckles. The processing unit 308 may determine, based on the correspondence, control operations corresponding to different combinations of gesture type changes and the spatial locations of the F groups of hand knuckles, and further adjust the location and/or the form of the virtual object in the picture displayed by the display unit 302.

In this embodiment of this application, the terminal device may determine a hand action of the user based on a plurality of consecutive sets of hand images, and further perform a control operation corresponding to the hand action.

The following describes, in combination with a specific application scenario, how a terminal device adjusts, based on a gesture or a hand action of a user, a picture displayed by the terminal device.

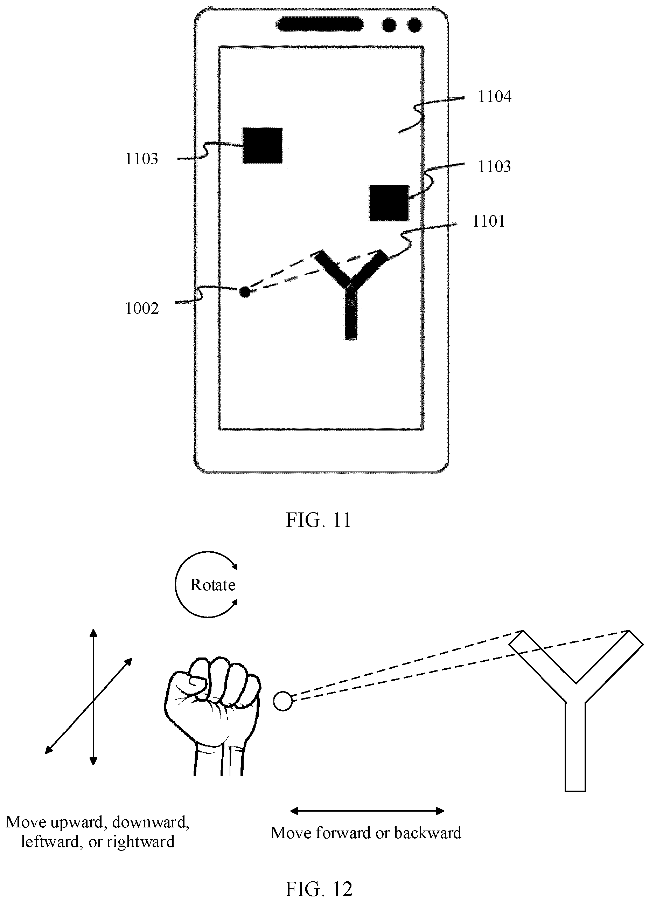

An interactive AR archery game is used as an example. A specific interaction method is as follows:
(1) The user starts an AR archery game application on the terminal device.
   After receiving an instruction sent by the user to start the AR archery game application, the terminal device starts the AR archery game application. During actual application, after the user taps a target icon on a touch display screen on the terminal device, the terminal device starts the AR archery game application, where the target icon is an icon of the AR archery game application.
(2) The terminal device photographs a real scene by using a rear-facing camera, superimposes a virtual object onto a real image obtained through photographing, and displays the real image on the display screen.
   The display screen displays the real image obtained through photographing by using the rear-facing camera and a superimposed virtual object. As shown in FIG. 11, 1101 represents a slingshot, 1102 represents a bullet, 1103 represents a shooting target, and 1104 represents a real image. 1101, 1102, and 1103 are virtual objects after being superimposed onto the real image 1104. Optionally, the terminal device plays background music of the AR archery game application.
(3) The terminal device obtains a hand image of the user through photographing by using a front-facing camera (a depth camera and a color camera), and detects whether the hand image includes a hand.
   If the terminal device detects that the hand image does not include a hand, the terminal device determines that a hand of the user does not fall within a field of view of the camera. In this case, the terminal device performs vibration to notify the user to adjust a location of the hand. This prevents an operation failure. If the hand image includes a hand, the terminal device performs a next step.
(4) The terminal device recognizes a first gesture based on the hand image obtained through photographing, and converts the first gesture into a first interaction instruction.

The first gesture may be a clenched fist gesture, and the first interaction instruction may be pinching the slingshot to load the bullet. During actual application, in a process in which the terminal device runs the AR archery game, if the terminal device detects a clenched fist gesture, the terminal device displays a picture in which the slingshot is pinched to load the bullet.

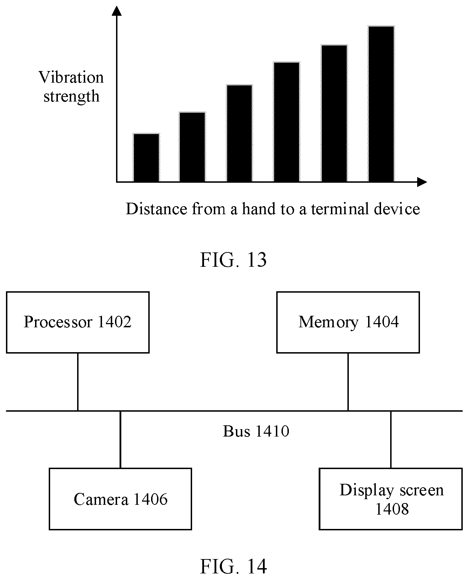

When the hand of the user moves, the camera obtains consecutive sets of hand images, and the terminal device recognizes each set of hand images, and may obtain a spatial location change in hand knuckles. A specific implementation is as follows: When the hand of the user moves upward, downward, leftward, or rightward, the terminal device determines that three-dimensional spatial locations of the hand knuckles undergo a continuous spatial change, and may control the bullet in the picture to continuously move upward, downward, leftward, or rightward. When the hand palm of the user deflects, the terminal device may obtain a direction of the hand palm based on a spatial location change in the hand knuckles, and adjusts a shooting direction of the bullet based on the direction of the hand palm, where the shooting direction of the bullet is the same as the direction of the hand palm. When the hand of the user moves forward or backward, spatial z coordinates of the hand knuckles change, and the terminal device may control force for shooting the bullet. FIG. 12 is a schematic diagram of a movement of a hand according to an embodiment of this application. As shown in FIG. 12, the hand may move upward or downward, may move leftward or rightward, or may move forward or backward, or a direction of the hand palm may be adjusted. Specifically, the terminal device may determine distances between locations of all of a group of hand knuckles based on spatial locations of the hand knuckles, and further determine a direction of the hand palm. During actual application, each movement of the hand may cause a corresponding change to the bullet in the picture displayed by the terminal device. Specifically, a movement track of the hand is consistent with a movement track of the bullet in the picture. In addition, when the terminal device detects that the hand of the user moves, a vibration unit on the terminal device operates. As shown in FIG. 13, a longer distance from the hand to the camera indicates a higher vibration strength and larger tension of the slingshot, and a 3D vibration effect is achieved. It may be understood that, when the hand of the user moves in a clenched fist state, a gesture recognition result remains unchanged, and a state of pinching the slingshot to load the bullet is kept.

(5) The terminal device recognizes a second gesture based on the hand image obtained through photographing, and converts the first gesture into a second interaction instruction.

The second gesture may be a five-finger splay gesture, and the second interaction instruction may be releasing the bullet. During actual application, in a process in which the terminal device runs the AR archery game, if the terminal device detects the five-finger splay gesture, the terminal device displays a picture in which the bullet is released. It may be understood that, the user may make the bullet loaded on the slingshot in the picture by using the clenched fist gesture, control a movement of the bullet by moving the hand, and release the bullet in the picture by using the five-finger splay gesture.

(6) The terminal device triggers a vibration effect and a music special effect.

When a bullet hits a virtual object in the picture displayed by the terminal device, the terminal device triggers a vibration effect and a music special effect, to enhance an immersive sensation of the user.

When playing the AR archery game, the user may manipulate the slingshot in a picture by using a gesture, to perform operations such as loading a bullet on the slingshot, adjusting a shooting direction of the bullet, adjusting tension of the slingshot, adjusting a location of the bullet, and releasing the bullet. In other words, the user may manipulate the slingshot in the picture by using a gesture or a hand action, and feels directly manipulate the slingshot in the picture by using the hand of the user.

An interactive AR escape game is used as an example below to describe application of gesture and hand action recognition. In an AR escape game process, a series of hand actions such as screwing, rotating a key, pushing a door, and pulling a drawer are included. In natural gesture recognition, all hand knuckles are traced, and all behavior is captured and recognized, to determine various gestures and hand actions of the user, and further adjust a picture played by the terminal device. During actual application, the terminal device may extract all hand knuckles on a hand, and then analyze a hand action and a hand location in real time. In this way, any hand action and gesture of the user can be recognized, and a corresponding control operation can be implemented.

FIG. 14 is a schematic structural diagram of hardware of a terminal device 1400 according to an embodiment of the present invention. As shown in FIG. 14, the terminal device 1400 may be used as an implementation of the terminal 300. The terminal device 1400 includes a processor 1402, a memory 1404, a camera 1406, a display screen 1408, and a bus 1410. The processor 1402, the memory 1404, the camera 1406, and the display screen 1408 are communicatively connected to each other through the bus 1410. The processor 1402 may implement recognition in FIG. 3.

The processor 1402 may be a general-purpose CPU, a microprocessor, an application-specific integrated circuit (Application Specific Integrated Circuit, ASIC), or one or more integrated circuits, to execute a related program to implement the technical solutions provided in the embodiments of the present invention.

The memory 1404 may be a read-only memory (Read Only Memory, ROM), a static storage device, a dynamic storage device, or a random access memory (Random Access Memory, RAM). The memory 1404 may store an operating system and another application program. Software or firmware is used to implement functions that need to be performed by modules and components included in the terminal 300 provided in the embodiments of the present invention. Alternatively, program code used to implement the foregoing method provided in the method embodiments of the present invention is stored in the memory 1404, and the processor 1402 reads code in the memory 1404 to perform operations that need to be performed by modules and components included in the terminal 300, or perform the foregoing method provided in the embodiments of this application.

The display screen 1408 is configured to display various images and dynamic pictures described in the embodiments of this application.

The bus 1410 may include a path used for transmitting information between components (for example, the processor 1402, the memory 1404, the camera 1406, and the display screen 1408) of the terminal device 1400.

The camera 1406 may be a depth camera, and is configured to obtain a depth image through photographing. The camera 1406 may be a color camera, for example, an RGB camera, and is configured to obtain a depth image through photographing. The camera 1406 may include a color camera and a depth camera. The color camera is configured to obtain a color image through photographing. The depth camera is configured to obtain a depth image through photographing. The color camera and the depth camera may synchronously photograph a same scene.

It should be noted that, although FIG. 14 only shows that the terminal device 1400 includes the processor 1402, the memory 1404, the camera 1406, the display screen 1408, and the bus 1410, in a specific implementation, a person skilled in the art should understand that the terminal device 1400 further includes other components required for normal running. Furthermore, based on a specific requirement, a person skilled in the art should understand that the terminal device 1400 may further include hardware components for implementing other additional functions. In addition, a person skilled in the art should understand that the terminal device 1400 may include only components required for implementing the embodiments of the present invention, but does not need to include all components shown in FIG. 14.

It should be noted that, for brief description, the foregoing method embodiments are expressed as combinations of a series of actions. However, a person skilled in the art should know that the present invention is not limited to the described action sequence, because according to the present invention, some steps may be performed in another sequence or performed simultaneously. In addition, a person skilled in the art should know that the actions and modules described in this specification are not mandatory for the present invention.

A person of ordinary skill in the art may understand that all or some of the procedures of the methods in the foregoing embodiments may be implemented by a computer program instructing related hardware. The program may be stored in a computer-readable storage medium. When the program is executed, the procedures of the methods in the embodiments and the like may be performed. The foregoing storage medium may be a magnetic disk, an optical disc, a read-only memory (ROM: Read-Only Memory), a random access memory (RAM: Random Access Memory), or the like.

Although the present invention is described with reference to the embodiments, in a process of implementing the present invention that the claims protect, a person skilled in the art may understand and implement other variations of the disclosed embodiments by viewing the accompanying drawings, disclosed content, and the appended claims. In the claims, "comprising" (comprising) does not exclude another component or another step, and "a" or "one" does not exclude a case of plurality. A single processor or another module may implement several functions enumerated in the claims. Some measures are recorded in dependent claims that are different from each other, but this does not mean that these measures cannot be combined to produce a better effect. A computer program may be stored/distributed in an appropriate medium such as an optical storage medium or a solid-state medium and be provided together with other hardware or be used as a part of hardware, or may be distributed in another manner, for example, by using the internet or another wired or wireless telecommunications system.

Specific examples are used in this specification to describe the principle and implementations of the present invention. The descriptions of the foregoing embodiments are merely intended to help understand the methods and ideas of the present invention. In addition, with respect to the implementations and the application scope, modifications may be made by a person of ordinary skill in the art according to the ideas of the present invention. Therefore, this specification shall not be construed as a limitation on the present invention.

## Claims

1. A gesture-based manipulation method, comprising:
displaying a target picture, wherein the target picture comprises a virtual object to be manipulated by using a detected gesture or a detected hand action (701);
obtaining F sets of hand images (702);
recognizing locations of hand knuckles on hands in the F sets of hand images based on the F sets of hand images, to obtain spatial locations of F groups of hand knuckles (703), wherein spatial locations of any group of hand knuckles are spatial locations of hand knuckles on a hand in a set of hand images, and F is an integer greater than 0; and
performing, based on the spatial locations of the F groups of hand knuckles, a control operation corresponding to the spatial locations of the F groups of hand knuckles, wherein the control operation is used to adjust a form of the virtual object in the target picture (704);
wherein the performing a control operation corresponding to the spatial locations of the F groups of hand knuckles comprises:
determining M gesture types based on the spatial locations of the F groups of hand knuckles, wherein M is less than or equal to F, and M is a positive integer; and
performing the control operation corresponding to the M gesture types;
wherein the determining M gesture types corresponding to the spatial locations of the F groups of hand knuckles comprises:
determining at least two gesture types corresponding to the spatial locations of the F groups of hand knuckles, wherein F is greater than 1; and
the performing the control operation corresponding to the M gesture types comprises:
performing, based on a gesture type change in the at least two gesture types, the control operation corresponding to the at least two gesture types;
wherein the method further comprises:
when a quantity of hand knuckles in each of K sets of hand images is less than a quantity threshold, notifying that a gesture operation goes beyond a manipulation range, wherein the K sets of hand images are comprised in the F sets of hand images, K is less than or equal to F, and K is a positive integer.

2. The method according to claim 1, wherein the performing a control operation corresponding to the spatial locations of the F groups of hand knuckles comprises:
determining a spatial location change in hand knuckles between hand knuckle groups based on the spatial locations of the F groups of hand knuckles, wherein F is greater than 1; and
performing the control operation based on the spatial location change.

3. The method according to any one of claims 1 or 2, wherein the recognizing locations of hand knuckles in the F sets of hand images based on the F sets of hand images, to obtain spatial locations of F groups of hand knuckles comprises:
detecting, based on at least one of a color image and a depth image that are comprised in any set of hand images in the F sets of hand images, a location area in which a hand in the any set of hand images is located; and
recognizing locations of hand knuckles on the hand in the location area based on at least one of the color image and the depth image.

4. The method according to claim 3, wherein the detecting, based on at least one of a color image and a depth image that are comprised in any set of hand images in the F sets of hand images, a location area in which a hand in the any set of hand images is located comprises:
detecting, based on a color image comprised in a target set of hand images, a first location area in which a hand in the color image comprised in the target set of hand images is located, wherein the target set of hand images is any set of images in the F sets of hand images; and
the recognizing locations of hand knuckles on the hand in the location area based on at least one of the color image and the depth image comprises:
recognizing, based on a depth image comprised in the target set of hand images, locations of hand knuckles on a hand in a second location area in the depth image, to obtain spatial locations of a group of hand knuckles corresponding to the target set of hand images, wherein the second location area is an area that is in the depth image and that corresponds to the first location area, and the depth image and the color image are images obtained by synchronously photographing a same scene.

5. The method according to claim 3, wherein the detecting, based on at least one of a color image and a depth image that are comprised in any set of hand images in the F sets of hand images, a location area in which a hand in the any set of hand images is located comprises:
detecting, based on a color image comprised in a target set of hand images, a first location area in which a hand in the color image is located, wherein the target set of hand images is any set of images in the F sets of hand images; and
the recognizing locations of hand knuckles on the hand in the location area based on at least one of the color image and the depth image comprises:
recognizing locations of hand knuckles on the hand in the first location area based on the color image, to obtain spatial locations of a first group of hand knuckles;
recognizing, based on a depth image comprised in the target set of hand images, locations of hand knuckles on a hand in a second location area in the depth image, to obtain spatial locations of a second group of hand knuckles, wherein the second location area is an area that is in the depth image and that corresponds to the first location area, and the depth image and the color image are images obtained by synchronously photographing a same scene; and
merging the spatial locations of the first group of hand knuckles and the spatial locations of the second group of hand knuckles, to obtain spatial locations of a group of hand knuckles corresponding to the target set of hand images.

6. The method according to claim 4 or 5, wherein before the recognizing hand knuckles in the F sets of hand images, to obtain spatial locations of F groups of hand knuckles, the method further comprises:
synchronously photographing the same scene by using a color sensor and a depth sensor, to obtain an original color image and an original depth image;
spatially aligning the original color image and the original depth image; and
separately performing hand segmentation on an aligned original color image and an aligned original depth image, to obtain the target set of hand images.

7. A terminal device, comprising:
a display unit (302), configured to display a target picture, wherein the target picture comprises a virtual object to be manipulated by using a detected gesture or a detected hand action;
an obtaining unit (304), configured to obtain F sets of hand images;
a recognition unit (306), configured to recognize locations of hand knuckles on hands in the F sets of hand images based on the F sets of hand images, to obtain spatial locations of F groups of hand knuckles, wherein spatial locations of any group of hand knuckles are spatial locations of hand knuckles on a hand in a set of hand images, and F is an integer greater than 0; and
a processing unit (308), configured to perform, based on the spatial locations of the F groups of hand knuckles, a control operation corresponding to the spatial locations of the F groups of hand knuckles, wherein the control operation is used to adjust a form of the virtual object in the target picture;
wherein the processing unit (308) is configured to:
determine M gesture types based on the spatial locations of the F groups of hand knuckles, wherein M is less than or equal to F, and M is a positive integer; and
perform the control operation corresponding to the M gesture types;
wherein the determine M gesture types corresponding to the spatial locations of the F groups of hand knuckles comprises:
determine at least two gesture types corresponding to the spatial locations of the F groups of hand knuckles, wherein F is greater than 1; and
the perform the control operation corresponding to the M gesture types comprises:
perform, based on a gesture type change in the at least two gesture types, the control operation corresponding to the at least two gesture types; and
wherein the processing unit (3087) is further configured to: when a quantity of hand knuckles in each of K sets of hand images is less than a quantity threshold, notify that a gesture operation goes beyond a manipulation range, where the K sets of hand images are included in the F sets of hand images, K is less than or equal to F, and K is a positive integer.

8. A computer-readable storage medium, wherein the computer storage medium stores a computer program, the computer program comprises program instructions, and when the program instructions are executed by a processor, the processor is enabled to perform the method according to any one of claims 1 to 6.

## Patentansprüche

1. Gestenbasiertes Verarbeitungsverfahren, umfassend:
Anzeigen eines Zielbilds, wobei das Zielbild ein virtuelles Objekt umfasst, das unter Verwendung einer detektierten Geste oder einer detektierten Handaktion (701) verarbeitet werden soll;
Erhalten von F Sätzen von Handbildern (702);
Erkennen von Positionen von Handknöcheln an Händen in den F Sätzen von Handbildern basierend auf den F Sätzen von Handbildern, um räumliche Positionen von F Gruppen von Handknöcheln (703) zu erhalten, wobei räumliche Positionen einer beliebigen Gruppe von Handknöcheln räumliche Positionen von Handknöcheln an einer Hand in einem Satz von Handbildern sind und F eine ganze Zahl größer als 0 ist; und
Durchführen, basierend auf den räumlichen Positionen der F Gruppen von Handknöcheln, einer Steuerungsoperation entsprechend den räumlichen Positionen der F Gruppen von Handknöcheln, wobei die Steuerungsoperation dazu verwendet wird, eine Form des virtuellen Objekts in dem Zielbild (704) anzupassen;
wobei das Durchführen einer Steuerungsoperation entsprechend den räumlichen Positionen der F Gruppen von Handknöcheln Folgendes umfasst:
Bestimmen von M Gestentypen basierend auf den räumlichen Positionen der F Gruppen von Handknöcheln, wobei M kleiner als oder gleich F ist und M eine positive ganze Zahl ist; und
Durchführen der Steuerungsoperation entsprechend den M Gestentypen;
wobei das Bestimmen von M Gestentypen entsprechend den räumlichen Positionen der F Gruppen von Handknöcheln Folgendes umfasst:
Bestimmen von mindestens zwei Gestentypen entsprechend den räumlichen Positionen der F Gruppen von Handknöcheln, wobei F größer als 1 ist; und
das Durchführen der Steuerungsoperation entsprechend den M Gestentypen Folgendes umfasst:
Durchführen, basierend auf einer Änderung des Gestentyps in den mindestens zwei Gestentypen, der Steuerungsoperation entsprechend den mindestens zwei Gestentypen;
wobei das Verfahren ferner Folgendes umfasst:
wenn eine Quantität von Handknöcheln in jedem von K Sätzen von Handbildern kleiner als ein Quantitätsschwellenwert ist, Benachrichtigen, dass eine Gestenoperation über einen Verarbeitungsbereich hinaus geht, wobei die K Sätze von Handbildern in den F Sätzen von Handbildern enthalten sind, K kleiner als oder gleich F ist und K eine positive ganze Zahl ist.

2. Verfahren nach Anspruch 1, wobei das Durchführen einer Steuerungsoperation entsprechend den räumlichen Positionen der F Gruppen von Handknöcheln Folgendes umfasst:
Bestimmen einer Änderung der räumlichen Position von Handknöcheln zwischen Handknöchelgruppen basierend auf den räumlichen Positionen der F Gruppen von Handknöcheln, wobei F größer als 1 ist; und
Durchführen der Steuerungsoperation basierend auf der Änderung der räumlichen Position.

3. Verfahren nach einem der Ansprüche 1 oder 2, wobei das Erkennen von Positionen von Handknöcheln in den F Sätzen von Handbildern basierend auf den F Sätzen von Handbildern, um räumliche Positionen von F Gruppen von Handknöcheln zu erhalten, Folgendes umfasst:
Detektieren, basierend auf mindestens einem eines Farbbilds oder eines Tiefenbilds, die in einem beliebigen Satz von Handbildern in den F Sätzen von Handbildern enthalten sind, eines Positionsbereichs, in dem eine Hand in dem beliebigen Satz von Handbildern angeordnet ist; und
Erkennen von Positionen von Handknöcheln an der Hand in dem Positionsbereich basierend auf mindestens einem des Farbbilds oder des Tiefenbilds.

4. Verfahren nach Anspruch 3, wobei das Detektieren, basierend auf mindestens einem eines Farbbilds oder eines Tiefenbilds, die in einem beliebigen Satz von Handbildern in den F Sätzen von Handbildern enthalten sind, eines Positionsbereichs, in dem eine Hand in dem beliebigen Satz von Handbildern angeordnet ist, Folgendes umfasst:
Detektieren, basierend auf einem Farbbild, das in einem Zielsatz von Handbildern enthalten ist, eines ersten Positionsbereichs, in dem eine Hand in dem Farbbild, das in dem Zielsatz von Handbildern enthalten ist, angeordnet ist, wobei der Zielsatz von Handbildern ein beliebiger Satz von Bildern in den F Sätzen von Handbildern ist; und
das Erkennen von Positionen von Handknöcheln an der Hand in dem Positionsbereich basierend auf mindestens einem des Farbbilds oder des Tiefenbilds Folgendes umfasst: Erkennen, basierend auf einem Tiefenbild, das in dem Zielsatz von Handbildern enthalten ist, von Positionen von Handknöcheln an einer Hand in einem zweiten Positionsbereich in dem Tiefenbild, um räumliche Positionen einer Gruppe von Handknöcheln entsprechend dem Zielsatz von Handbildern zu erhalten, wobei der zweite Positionsbereich ein Bereich ist, der in dem Tiefenbild ist und der dem ersten Positionsbereich entspricht, und das Tiefenbild und das Farbbild Bilder sind, die durch synchrones Fotografieren einer selben Szene erhalten werden.

5. Verfahren nach Anspruch 3, wobei das Detektieren, basierend auf mindestens einem eines Farbbilds oder eines Tiefenbilds, die in einem beliebigen Satz von Handbildern in den F Sätzen von Handbildern enthalten sind, eines Positionsbereichs, in dem eine Hand in dem beliebigen Satz von Handbildern angeordnet ist, Folgendes umfasst:
Detektieren, basierend auf einem Farbbild, das in einem Zielsatz von Handbildern enthalten ist, eines ersten Positionsbereichs, in dem eine Hand in dem Farbbild angeordnet ist, wobei der Zielsatz von Handbildern ein beliebiger Satz von Bildern in den F Sätzen von Handbildern ist; und
das Erkennen von Positionen von Handknöcheln an der Hand in dem Positionsbereich basierend auf mindestens einem des Farbbilds oder des Tiefenbilds Folgendes umfasst:
Erkennen von Positionen von Handknöcheln an der Hand in dem ersten Positionsbereich basierend auf dem Farbbild, um räumliche Positionen einer ersten Gruppe von Handknöcheln zu erhalten;
Erkennen, basierend auf einem Tiefenbild, das in dem Zielsatz von Handbildern enthalten ist, von Positionen von Handknöcheln an einer Hand in einem zweiten Positionsbereich in dem Tiefenbild, um räumliche Positionen einer zweiten Gruppe von Handknöcheln zu erhalten, wobei der zweite Positionsbereich ein Bereich ist, der in dem Tiefenbild ist und der dem ersten Positionsbereich entspricht, und das Tiefenbild und das Farbbild Bilder sind, die durch synchrones Fotografieren einer selben Szene erhalten werden; und
Zusammenführen der räumlichen Positionen der ersten Gruppe von Handknöcheln und der räumlichen Positionen der zweiten Gruppe von Handknöcheln, um räumliche Positionen einer Gruppe von Handknöcheln entsprechend dem Zielsatz von Handbildern zu erhalten.

6. Verfahren nach Anspruch 4 oder 5, wobei das Verfahren vor dem Erkennen von Handknöcheln in den F Sätzen von Handbildern, um räumliche Positionen von F Gruppen von Handknöcheln zu erhalten, ferner Folgendes umfasst:
synchrones Fotografieren derselben Szene unter Verwendung eines Farbsensors und eines Tiefensensors, um ein originales Farbbild und ein originales Tiefenbild zu erhalten;
räumliches Ausrichten des originalen Farbbilds und des originalen Tiefenbilds; und
getrenntes Durchführen von Handsegmentierung an einem ausgerichteten originalen Farbbild und einem ausgerichteten originalen Tiefenbild, um den Zielsatz von Handbildern zu erhalten.

7. Endgerät, umfassend;
eine Anzeigeeinheit (302), konfiguriert zum Anzeigen eines Zielbilds, wobei das Zielbild ein virtuelles Objekt umfasst, das unter Verwendung einer detektierten Geste oder einer detektierten Handaktion verarbeitet werden soll;
eine Erhalteeinheit (304), konfiguriert zum Erhalten von F Sätzen von Handbildern;
eine Erkennungseinheit (306), konfiguriert zum Erkennen von Positionen von Handknöcheln an Händen in den F Sätzen von Handbildern basierend auf den F Sätzen von Handbildern, um räumliche Positionen von F Gruppen von Handknöcheln zu erhalten, wobei räumliche Positionen einer beliebigen Gruppe von Handknöcheln räumliche Positionen von Handknöcheln an einer Hand in einem Satz von Handbildern sind und F eine ganze Zahl größer als 0 ist; und
eine Verarbeitungseinheit (308), konfiguriert zum Durchführen, basierend auf den räumlichen Positionen der F Gruppen von Handknöcheln, einer Steuerungsoperation entsprechend den räumlichen Positionen der F Gruppen von Handknöcheln, wobei die Steuerungsoperation verwendet wird, um eine Form des virtuellen Objekts in dem Zielbild anzupassen;
wobei die Verarbeitungseinheit (308) konfiguriert ist zum:
Bestimmen von M Gestentypen basierend auf den räumlichen Positionen der F Gruppen von Handknöcheln, wobei M kleiner als oder gleich F ist und M eine positive ganze Zahl ist; und
Durchführen der Steuerungsoperation entsprechend den M Gestentypen;
wobei das Bestimmen von M Gestentypen entsprechend den räumlichen Positionen der F Gruppen von Handknöcheln Folgendes umfasst:
Bestimmen von mindestens zwei Gestentypen entsprechend den räumlichen Positionen der F Gruppen von Handknöcheln, wobei F größer als 1 ist; und
das Durchführen der Steuerungsoperation entsprechend den M Gestentypen Folgendes umfasst:
Durchführen, basierend auf einer Änderung des Gestentyps in den mindestens zwei Gestentypen, der Steuerungsoperation entsprechend den mindestens zwei Gestentypen; und
wobei die Verarbeitungseinheit (3087) ferner zu Folgendem konfiguriert ist: wenn eine Quantität von Handknöcheln in jedem von K Sätzen von Handbildern kleiner als ein Quantitätsschwellenwert ist, Benachrichtigen, dass eine Gestenoperation über einen Verarbeitungsbereich hinaus geht, wobei die K Sätze von Handbildern in den F Sätzen von Handbildern enthalten sind, K kleiner als oder gleich F ist und K eine positive ganze Zahl ist.

8. Computerlesbares Speichermedium, wobei das Computerspeichermedium ein Computerprogramm speichert, das Computerprogramm Programmanweisungen umfasst, und wenn die Programmanweisungen von einem Prozessor ausgeführt werden, der Prozessor in die Lage versetzt wird, das Verfahren nach einem der Ansprüche 1 bis 6 durchzuführen.

## Revendications

1. Procédé de manipulation basé sur le geste, comprenant les étapes consistant à :
afficher une image cible, l'image cible comprenant un objet virtuel à manipuler au moyen d'un geste détecté ou d'une action de la main détectée (701) ;
obtenir F ensembles d'images de main (702) ;
reconnaître les emplacements des articulations de la main sur les mains dans les F ensembles d'images de main sur la base des F ensembles d'images de main, pour obtenir les emplacements spatiaux de F groupes d'articulations de la main (703), les emplacements spatiaux d'un groupe quelconque d'articulations de la main étant les emplacements spatiaux des articulations de la main sur une main d'un ensemble d'images de main, et F étant un entier supérieur à 0 ; et
effectuer, sur la base des emplacements spatiaux des F groupes d'articulations de la main, une opération de commande correspondant aux emplacements spatiaux des F groupes d'articulations de la main, l'opération de commande servant à régler une forme de l'objet virtuel dans l'image cible (704) ;
dans lequel l'exécution d'une opération de commande correspondant aux emplacements spatiaux des F groupes d'articulations de la main consiste à :
déterminer M types de geste sur la base des emplacements spatiaux des F groupes d'articulations de la main, M étant inférieur ou égal à F, et M étant un entier positif ; et
effectuer l'opération de commande correspondant aux M types de geste ;
dans lequel la détermination des M types de geste correspondant aux emplacements spatiaux des F groupes d'articulations de la main consiste à :
déterminer au moins deux types de geste correspondant aux emplacements spatiaux des F groupes d'articulations de la main, F étant supérieur à 1 ; et
l'exécution de l'opération de commande correspondant aux M types de geste consiste à :
effectuer, sur la base d'un changement de type de geste dans les au moins deux types de geste, l'opération de commande correspondant auxdits au moins deux types de geste ;
le procédé comprenant également l'étape consistant à :
lorsqu'une quantité d'articulations de la main dans chaque ensemble de K ensembles d'images de main est inférieure à un seuil de quantité, notifier qu'une opération de geste sort d'une plage de manipulation, les K ensembles d'images de main étant compris dans les F ensembles d'image de main, K étant inférieur ou égal F, et K étant un entier positif.

2. Procédé selon la revendication 1, dans lequel l'exécution d'une opération de commande correspondant aux emplacements spatiaux des F groupes d'articulations de la main comprend les étapes consistant à :
déterminer un changement d'emplacement spatial dans les articulations de la main entre les groupes d'articulations de la main sur la base des emplacements spatiaux des F groupes d'articulations de la main, F étant supérieur à 1 ; et
effectuer l'opération de commande sur la base du changement d'emplacement spatial.

3. Procédé selon l'une quelconque des revendications 1 et 2, dans lequel la reconnaissance des emplacements des articulations de la main dans les F ensembles d'images de main sur la base des F ensembles d'images de main, pour obtenir les emplacements spatiaux de F groupes d'articulations de la main, consiste à :
détecter, sur la base d'au moins une image parmi une image de couleur et une image de profondeur qui sont comprises dans n'importe quel ensemble d'images de main des F ensembles d'image de main, une zone d'emplacement dans laquelle une main dudit n'importe quel ensemble d'images de main est située ; et
reconnaître les emplacements des articulations de la main sur la main dans la zone d'emplacement sur la base d'au moins une image parmi l'image de couleur et l'image de profondeur.

4. Procédé selon la revendication 3, dans lequel la détection, sur la base d'au moins une image parmi une image de couleur et une image de profondeur qui sont comprises dans n'importe quel ensemble d'images de main des F ensembles d'image de main, d'une zone d'emplacement dans laquelle une main dudit n'importe quel ensemble d'images de main est située consiste à :
détecter, sur la base d'une image de couleur comprise dans un ensemble cible d'images de main, une première zone d'emplacement dans laquelle une main située dans l'image de couleur comprise dans l'ensemble cible d'images de main est située, l'ensemble cible d'images de main étant n'importe quel ensemble d'images des F ensembles d'images de main, et
la reconnaissance des emplacements des articulations de la main sur la main dans la zone d'emplacement sur la base d'au moins une image parmi l'image de couleur et l'image de profondeur consiste à :
reconnaître, sur la base d'une image de profondeur comprise dans l'ensemble cible d'images de main, les emplacements des articulations de la main sur une main située dans une deuxième zone d'emplacement dans l'image de profondeur, pour obtenir les emplacements spatiaux d'un groupe d'articulations de la main correspondant à l'ensemble cible d'images de main, la deuxième zone d'emplacement étant une zone qui se trouve dans l'image de profondeur et qui correspond à la première zone d'emplacement, et l'image de profondeur et l'image de couleur étant des images obtenues par photographie synchrone d'une même scène.

5. Procédé selon la revendication 3, dans lequel la détection, sur la base d'au moins une image parmi une image de couleur et une image de profondeur qui sont comprises dans n'importe quel ensemble d'images de main des F ensembles d'image de main, d'une zone d'emplacement dans laquelle une main dudit n'importe quel ensemble d'images de main est située consiste à :
détecter, sur la base d'une image de couleur comprise dans un ensemble cible d'images de main, une première zone d'emplacement dans laquelle une main de l'image de couleur est située, l'ensemble cible d'images de main étant n'importe quel ensemble d'images des F ensembles d'images de main, et
la reconnaissance des emplacements des articulations de la main sur la main dans la zone d'emplacement sur la base d'au moins une image parmi l'image de couleur et l'image de profondeur consiste à :
reconnaître les emplacements des articulations de la main sur la main située dans la première zone d'emplacement sur la base de l'image de couleur, pour obtenir les emplacements spatiaux d'un premier groupe d'articulations de la main ;
reconnaître, sur la base d'une image de profondeur comprise dans l'ensemble cible d'images de main, les emplacements des articulations de la main sur une main située dans une deuxième zone d'emplacement dans l'image de profondeur pour obtenir les emplacements spatiaux d'un deuxième groupe d'articulations de la main, la deuxième zone d'emplacement étant une zone qui se trouve dans l'image de profondeur et qui correspond à la première zone d'emplacement, et l'image de profondeur et l'image de couleur étant des images obtenues par photographie synchrone d'une même scène ; et
fusionner les emplacements spatiaux du premier groupe d'articulations de la main et les emplacements spatiaux du deuxième groupe d'articulations de la main, pour obtenir les emplacements spatiaux d'un groupe d'articulations de la main correspondant à l'ensemble cible d'images de main.

6. Procédé selon la revendication 4 ou 5, le procédé, avant la reconnaissance des articulations de la main dans les F ensembles d'images de main, pour obtenir les emplacements spatiaux de F groupes d'articulations de la main, comprenant également les étapes consistant à :
photographier de façon synchrone la même scène au moyen d'un capteur de couleur et d'un capteur de profondeur, pour obtenir une image de couleur originale et une image de profondeur originale ;
aligner spatialement l'image de couleur originale et l'image de profondeur originale ; et
effectuer séparément une segmentation de la main sur une image de couleur originale alignée et une image de profondeur originale alignée, pour obtenir l'ensemble cible d'images de main.

7. Dispositif terminal, comprenant :
une unité d'affichage (302), configurée pour afficher une image cible, l'image cible comprenant un objet virtuel à manipuler au moyen d'un geste détecté ou d'une action de la main détectée ;
une unité d'obtention (304), configurée pour obtenir F ensembles d'images de main ;
une unité de reconnaissance (306), configurée pour reconnaître les emplacements des articulations de la main sur les mains dans les F ensembles d'images de main sur la base des F ensembles d'images de main, pour obtenir les emplacements spatiaux de F groupes d'articulations de la main, les emplacements spatiaux d'un groupe quelconque d'articulations de la main étant les emplacements spatiaux des articulations de la main sur une main d'un ensemble d'images de main, et F étant un entier supérieur à 0 ; et
une unité de traitement (308), configurée pour effectuer, sur la base des emplacements spatiaux des F groupes d'articulations de la main, une opération de commande correspondant aux emplacements spatiaux des F groupes d'articulations de la main, l'opération de commande servant à régler une forme de l'objet virtuel dans l'image cible ;
l'unité de traitement (308) étant configurée pour :
déterminer M types de geste sur la base des emplacements spatiaux des F groupes d'articulations de la main, M étant inférieur ou égal à F, et M étant un entier positif ; et
effectuer l'opération de commande correspondant aux M types de geste ;
dans lequel la détermination des M types de geste correspondant aux emplacements spatiaux des F groupes d'articulations de la main consiste à :
déterminer au moins deux types de geste correspondant aux emplacements spatiaux des F groupes d'articulations de la main, F étant supérieur à 1 ; et
l'exécution de l'opération de commande correspondant aux M types de geste consiste à ;
effectuer, sur la base d'un changement de type de geste dans les au moins deux types de geste, l'opération de commande correspondant auxdits au moins deux types de geste ; et
l'unité de traitement (3087) étant également configurée pour : lorsqu'une quantité d'articulations de la main dans chaque ensemble de K ensembles d'images de main est inférieure à un seuil de quantité, notifier qu'une opération de geste sort d'une plage de manipulation, les K ensembles d'images de main étant compris dans les F ensembles d'image de main, K étant inférieur ou égal F, et K étant un entier positif.

8. Support de stockage lisible par ordinateur, le support de stockage d'ordinateur stockant un programme informatique, le programme informatique comprenant des instructions de programme, et lorsque les instructions de programme sont exécutées par un processeur, le processeur est activé pour réaliser le procédé selon l'une quelconque des revendications 1 à 6.
